(19)

Europäisches
Patentamt
European
Patent Office
Office européen
des brevets

(11) **EP 4 389 784 A1**

(12) **EUROPEAN PATENT APPLICATION**

(43) Date of publication:
 **26.06.2024 Bulletin 2024/26**

(21) Application number: **22216571.4**

(22) Date of filing: **23.12.2022**

(51) International Patent Classification (IPC):
 **C08F 110/06** (2006.01)   **C08K 5/00** (2006.01)
 **C08L 23/12** (2006.01)

(52) Cooperative Patent Classification (CPC):
 (C-Sets available)
 **C08L 23/12; C08F 110/06; C08K 5/005;
 C08K 5/0083;** C08L 2205/24; C08L 2207/20;
 C08L 2314/02                         (Cont.)

(84) Designated Contracting States:
 **AL AT BE BG CH CY CZ DE DK EE ES FI FR GB
 GR HR HU IE IS IT LI LT LU LV MC ME MK MT NL
 NO PL PT RO RS SE SI SK SM TR**
 Designated Extension States:
 **BA**
 Designated Validation States:
 **KH MA MD TN**

(71) Applicant: **Lummus Novolen Technology GmbH
 68165 Mannheim (DE)**

(72) Inventors:
 • **RÄNTZSCH, Volker Andreas
  Mannheim (DE)**
 • **JÖRRES, Volker Heinrich
  Mannheim (DE)**

(74) Representative: **Osha BWB
 2, rue de la Paix
 75002 Paris (FR)**

(54) **NOVEL POLYMER BLENDS COMPRISING RECYCLED POLYMERS WITH ENHANCED
 PROPERTIES**

(57)     The present invention relates to a polymer blend comprising the component a) a composition comprising i) one or more polypropylene polymer(s) and ii) one or more additive(s), and the component b) one or more recycled polymer composition(s). Moreover, the present invention relates to a method of preparing the polymer blend according to the present invention. Furthermore, the present invention relates to a composition comprising i) one or more polypropylene polymer(s) and ii) one or more additive(s) and to the use of the composition according to the present invention in a polymer blend according to the present invention. Finally, the present invention provides an article comprising the composition according to the present invention or the polymer blend according to the present invention.

FIG. 1

(52) Cooperative Patent Classification (CPC): (Cont.)

C-Sets
**C08K 5/005, C08L 23/12;**
**C08K 5/0083, C08L 23/12;**
**C08L 23/12, C08L 23/12, C08K 5/005,**
**C08K 5/0083**

**Description**

**Field of the invention**

The present invention relates to a polymer blend comprising the component a) a composition comprising i) one or more polypropylene polymer(s) and ii) one or more additive(s), and the component b) one or more recycled polymer composition(s). Moreover, the present invention relates to a method of preparing the polymer blend according to the present invention. Furthermore, the present invention relates to a composition comprising i) one or more polypropylene polymer(s) and ii) one or more additive(s) and to the use of the composition according to the present invention in a polymer blend according to the present invention. Finally, the present invention provides an article comprising the composition according to the present invention or the polymer blend according to the present invention.

**Technical Background**

Virgin polypropylene polymers are produced using petrochemical technologies such as slurry or gas phase processes (see e.g., Pasquini, N., Polypropylene Handbook, 2nd Ed., 2005.). For the production of polypropylene homopolymers and random copolymers of propylene with other alpha-olefins, a plant set-up of at least one polymerization reactor is required. Polypropylene homopolymers are characterized by high stiffness (e.g., a high flexural modulus), but lack impact resistance at room temperature and lower temperatures. Random copolymers on the other hand provide higher impact resistance at room temperature, but lack high stiffness. Impact copolymers, also known as heterophasic copolymers, provide a combination of both, high stiffness and high impact resistance, as they contain fractions of polypropylene homopolymer and ethylenepropylene-copolymer. However, for the production of impact copolymers, a minimum of two polymerization reactors in a cascade set-up is required. Thus, impact copolymers are inherently more demanding in their production, i.e., are characterized by a higher manufacturing complexity than homopolymers or random copolymers.

For the production of virgin polypropylene polymers, different catalysts are used, which can be of Ziegler-Natta or metallocene type. For Ziegler-Natta catalysts, different internal donors were developed over the past decades, such as phthalate-, diether-, succinate-, or diester-based donors (see e.g., Paulik et al. Macromol. Chem. Phys. 2021, 222, 2100302.). Internal donors have a strong influence on the characteristics of produced polymers as they determine the achievable degree of isotacticity, the chemical composition distribution, the molecular weight distribution, and the incorporation of co-monomers.

For all virgin polypropylene polymers, natural resources in the form of propylene gas and potential other alpha-olefins have to be used. During the production of virgin polypropylene polymers, large amounts of energy are needed for melting the polymer in the plant extruder, for heating, for the compression of gases, for agitation, and for transporting the final products from the petrochemical plants to distributers and converters. Thus, the production of virgin polypropylene polymers requires a high use of natural resources and creates a certain carbon footprint (e.g., 1.72 kg $CO_2$-eq./ kg Material. Source: Average of Table 4 of Alsabri et al. Polymers 2021, 13, 3793.).

Compositions of virgin polypropylene polymers can be replaced by recycled polymer compositions from e.g., post-consumer waste in some applications. However, in terms of physical properties, recycled polymer compositions show inferior material properties compared to virgin polymer compositions as they contain a mixture of different polymers that lead to an averaged property profile instead of distinguished properties for different applications such as injection molding, film processing, or fiber and textile applications. Therefore, recycled polymer compositions are almost exclusively used for low demanding injection molding applications such as furniture, flower pots, or non-food contact packaging.

Several concepts to improve the properties of recycled polymer compositions are known in the art, e.g., the use of fillers (see WO 2022/084236 A1 and WO 2014/167493 A1), compatibilizers (see EP 3715410 A1 and WO 2022/104275 A1), and the addition of different types of virgin polymers (see WO 2022/084236 A1, EP 3715410 A1, EP 3916047 A1, WO 2021/032460 A1, WO 2014/167493 A1, WO 2021/165751 A1, US 2022/0145057 A1, WO 2022/104275 A1, WO 2022/123000 A1, WO 2022/123002 A1 and EP 3802689 B1). In case of the latter, blends of virgin and recycled polymer compositions have been shown to be a trade-off between favorable physical properties and the reduction of carbon footprint (see WO 2022/084236 A1 and WO 2021/165751 A1). State-of-the-art virgin polymer compositions frequently used for upgrading recycled polymer compositions are typically commercial polymer products that were intended to be used without the addition of recycled polymer compositions for compounding, injection molding, film, or fiber applications (see e.g., the examples of US 2022/0145057 A1, WO 2022/104275 A1, WO 2022/123000 A1 and WO 2022/123002 A1). Therefore, the achievable physical properties of blends between recycled and state-of-the-art virgin polymer compositions are a superposition between the two, and one would not achieve the desired property profile of fully virgin polymer compositions. To solve this problem, several applicants have disclosed compositions comprising e.g., multiple olefin (co-) polymers and/or polyethylene, and where the polymers need to be prepared using laborious polymerization technologies and complicated plant set-ups, i.e., are characterized by a high manufacturing complexity.

A different approach to solve the problem of improving the properties of blends between recycled and virgin polymer compositions was found in the use of special internal donors for the polymerization of virgin polymers that are intended to be blended with recycled polymer compositions. Here, it was found that especially non-phthalic acid esters selected from optionally substituted malonates, maleates, succinates, glutarates, cyclohexene- 1,2-dicarboxylates, benzoates and derivatives and/or mixtures thereof where especially suitable (see EP 3916047 A1 and WO 2021/032460 A1). The preferred type of internal donor was reported to be based on citraconates, e.g., bis(2-ethylhexyl) citraconate.

Overall, there is an unmet need for dedicated polymer compositions that can enhance the properties of recycled polymer compositions to virgin-like performance at low addition levels, which would be beneficial for the reduction of carbon footprint and a more efficient use of natural resources. Furthermore, the polymers for these compositions should be obtainable by a simple polymerization process, i.e., have a low manufacturing complexity.

**Summary of the invention**

It is a problem of the present invention to provide a polymer blend having excellent material properties, a low manufacturing complexity and a reduced carbon footprint.

It has now been found that these and other problems were solved by the polymer blend of the present invention and the composition of the present invention. The present invention relates to a polymer blend comprising at least the following components:

a) a composition comprising:

i) one or more polypropylene polymer(s),
ii) one or more additive(s) selected from the group consisting of antioxidants, acid scavengers, antistatic agents, nucleating agents, clarifiers, slip agents, and antiblocking agents;

whereby the composition according to a) is characterized by the following equation (1):

$$Relation\ I = \frac{T_3 + T_c - 225°C}{PI\ ratio \times \frac{XS}{wt\%} \times °C} \qquad (1)$$

wherein
Relation I is a value of >4.0;
$T_3$ is the peak maximum temperature in °C determined by analytical temperature rising elution fractionation method;
$T_c$ is the peak crystallization temperature in °C;
XS represents the xylene cold soluble content of the composition in wt%; and the PI ratio is defined according to the following equation (2):

$$PI\ ratio = \frac{PI}{-0.679 \times \log\left(\frac{MFR}{g/10min}\right) + 3.9} \qquad (2)$$

wherein
PI represents the rheological polydispersity index; and
MFR represents the melt mass-flow rate in g/10min;

b) one or more recycled polymer composition(s).

Surprisingly, it was found that the polymer blend of the present invention comprising a large fraction of recycled polymer composition and a small fraction of the composition according to the present invention display the same or better material properties (e.g., stiffness) than state-of-the-art compositions while at the same time having a significantly lower carbon footprint, using natural resources more efficiently, and additionally the composition of the present invention is characterized by a lower manufacturing complexity. Specifically, the polymer blend according to the present invention can be used to replace virgin polymer compositions such as heterophasic (impact) copolymer compositions which combine high stiffness with high impact resistance at room temperature, but have a higher carbon footprint, use natural resources less efficiently, and are characterized by a higher manufacturing complexity.

In addition, the present invention relates to a method of preparing the polymer blend according to the present invention comprising the step:

I) Mixing the components a) and b).

Furthermore, the present invention relates to a composition comprising:

i) one or more polypropylene polymer(s),
ii) one or more additive(s) selected from the group consisting of antioxidants, acid scavengers, antistatic agents, nucleating agents, clarifiers, slip agents, and antiblocking agents;

whereby the composition according to a) is characterized by the following equation (1):

$$Relation\ I = \frac{T_3 + T_c - 225°C}{PI\ ratio \times \frac{XS}{wt\%} \times °C} \qquad (1)$$

wherein
Relation I is a value of >4.0;
$T_3$ is the peak maximum temperature in °C determined by analytical temperature rising elution fractionation method;
$T_c$ is the peak crystallization temperature in °C;
XS represents the xylene cold soluble content of the composition in wt%; and the PI ratio is defined according to the following equation (2):

$$PI\ ratio = \frac{PI}{-0.679 \times \log\left(\frac{MFR}{g/10min}\right) + 3.9} \qquad (2)$$

wherein
PI represents the rheological polydispersity index; and
MFR represents the melt mass-flow rate in g/10min.

In addition, the present invention relates to the use of the composition according to the present invention in a polymer blend according to the present invention.

Finally, the present invention relates to an article comprising the composition according to the present invention or the polymer blend according to the present invention.

The present invention is based on the recognition that polymer blends are provided wherein the use of high contents of recycled material from e.g., post-consumer waste is enabled, while favorable properties (e.g., stiffness) of fully virgin polymer compositions are achieved. The polymer blends according to the present invention have excellent material properties such as flexural modulus and Charpy (notched) impact strength. The invention will contribute to a more efficient use of natural resources and will provide a solution for supplying materials having a reduced carbon footprint which are suitable for a wide range of applications including injection molding, thermoforming, and fiber applications. The compositions of the present invention having a specific combination of features such as molecular weight distribution, crystallizability, and stereoregularity can be used to provide polymer blends having a high content of recycled material and low carbon footprint while material properties (e.g., stiffness) of fully virgin polymer compositions can be achieved.

**Brief description of the drawings**

Figure 1. Flexural modulus of the examples and comparative examples from Compounding Trials and comparative virgin polymer compositions.

Figure 2. Carbon footprint of the examples and comparative examples that showed comparable physical properties, i.e., flexural modulus and Charpy (notched) impact resistance at 23°C.

Figure 3. Stiffness improvement [%] in relation to the reduction of carbon footprint [%] for the examples and comparative examples from Compounding Trials.

Figure 4. Stiffness improvement [%] in relation to the reduction of carbon footprint [%] for the examples and comparative examples of the present invention (Compounding Trials) and examples according to WO 2021/032460 A1.

## Detailed description of the invention

According to the present invention, the terms "virgin polymer" or "virgin" refer to a material, or specifically a polymer, that is newly produced prior to its first use, which have not already been recycled. For instance, the polypropylene polymer according to the present invention is a virgin material and specifically a virgin polymer.

## The Polymer Blend

The present invention relates to a polymer blend comprising at least the following components:

a) a composition comprising:

i) one or more polypropylene polymer(s),
ii) one or more additive(s) selected from the group consisting of antioxidants, acid scavengers, antistatic agents, nucleating agents, clarifiers, slip agents, and antiblocking agents;

whereby the composition according to a) is characterized by the following equation (1):

$$\textbf{\textit{Relation I}} = \frac{T_3 + T_C - 225°C}{PI\ ratio \times \frac{XS}{wt\%} \times °C} \qquad (1)$$

wherein
Relation I is a value of >4.0;
$T_3$ is the peak maximum temperature in °C determined by analytical temperature rising elution fractionation method;
$T_c$ is the peak crystallization temperature in °C;
XS represents the xylene cold soluble content of the composition in wt%; and the PI ratio is defined according to the following equation (2):

$$\textbf{\textit{PI ratio}} = \frac{PI}{-0.679 \times \log\left(\frac{MFR}{g/10min}\right) + 3.9} \qquad (2)$$

wherein
PI represents the rheological polydispersity index; and
MFR represents the melt mass-flow rate in g/10min;

b) one or more recycled polymer composition(s).

## Component a)

According to the present invention, the component a) is a composition comprising:

i) one or more polypropylene polymer(s),
ii) one or more additive(s) selected from the group consisting of antioxidants, acid scavengers, antistatic agents, nucleating agents, clarifiers, slip agents, and antiblocking agents;

whereby the composition according to a) is characterized by the following equation (1):

$$Relation\ I = \frac{T_3 + T_c - 225°C}{PI\ ratio \times \frac{XS}{wt\%} \times °C} \qquad (1)$$

wherein
Relation I is a value of >4.0;
$T_3$ is the peak maximum temperature in °C determined by analytical temperature rising elution fractionation method;
$T_c$ is the peak crystallization temperature in °C;
XS represents the xylene cold soluble content of the composition in wt%; and the PI ratio is defined according to the following equation (2):

$$PI\ ratio = \frac{PI}{-0.679 \times \log\left(\frac{MFR}{g/10min}\right) + 3.9} \qquad (2)$$

wherein
PI represents the rheological polydispersity index; and
MFR represents the melt mass-flow rate in g/10min.

According to the present invention, the term "$T_3$" is the peak maximum temperature in °C determined by analytical temperature rising elution fractionation (ATREF). Analytical temperature rising elution fractionation (ATREF) is performed using an automated CRYSTAF-TREF instrument (PolymerChar S.A., Spain), equipped with a heated infrared (IR) concentration detector with composition sensor, and a capillary viscometer detector. Polymer solutions are prepared at a concentration of 3 $\pm$0.25 mg/ml in 1,2-dichlorobenzene (stabilized with 500 ppm 2,6-di-tert-butyl-4-methylphenol) at 150° C for 90 minutes. After dissolution is completed, the sample is transferred to the ATREF column where the stabilization, crystallization, and elution cycles are performed. During stabilization, the column is cooled down from 150 to 95° C. at - 40°C/min and then kept at 95°C for 45 min. The crystallization step is carried out by cooling down from 95°C to 35° C at a cooling rate of -0.5°C/min. At the end of the crystallization step, the column is kept at 35°C for 10 minutes. Subsequently, the content of the column is eluted for 10 minutes to collect the soluble fraction. The elution step is carried out by heating from 35 to 140°C at a heating rate of +1°C/min, while maintaining a constant solvent flow rate of 0.5 ml/min. The obtained ATREF curve is normalized to 100% integral including the soluble fraction. The peak maximum temperature $T_3$ is assigned to the observed maximum in the temperature range from 100 to 150°C.

According to the present invention, preferably in equation (1) $T_3$ is of from 115.5°C to 140.0°C, more preferably of from 116.0°C to 135.0°C, still more preferably of from 116.5°C to 130.0°C, even more preferably of from 117.0°C to 125.0°C, even still more preferably of from 117.2°C to 122.0°C and most preferably in equation (1) $T_3$ is of from 117.3°C to 120.0°C.

According to the present invention, the term "$T_c$" is the peak crystallization temperature in °C. Peak melting temperatures $T_M$ (equivalent to $T_{pm}$) and peak crystallization temperatures $T_C$ (equivalent to $T_{pc}$) are determined according to ISO 11357-3. The heating and cooling protocol is as follows: [1] 50 to 200°C at +10 K/min, [2] 200°C for 5 min, [3] 200 to 50°C, at -10 K/min, [4] 50°C for 5 min, [5] 50 to 200°C at +10 K/min. For the peak melting temperature $T_M$, the second heating cycle (step [5]) is evaluated. For the peak crystallization temperature $T_c$, the cooling cycle (step [3]) is evaluated.

According to the present invention, preferably in equation (1) $T_c$ is of from 115.0°C to 145.0°C, more preferably of from 117.0°C to 140.0°C, still more preferably of from 119.0°C to 139.0°C, even more preferably of from 120.0°C to 138.0°C, even still more preferably of from 122.0°C to 137.0°C, even still more preferably of from 125.0°C to 136.0°C, even still more preferably of from 127.0°C to 135.0°C, most preferably of from 129.0°C to 135.0°C.

According to the present invention, the term "XS" means xylene cold soluble content in wt%. XS is determined based on ISO 16152 with a modified temperature profile. For the analysis, 5 grams of sample are added to a 1000 ml round bottom flask and combined with 450 ml of ortho-xylene. The sample / xylene mixture is heated to 140$\pm$2°C under reflux and kept at that temperature for 60 min until a clear solution is obtained. The flask is cooled down to 130°C until refluxing stops. Subsequently, the mixture is agitated and cooled using an ice bath for a minimum of 20 min until 5°C is reached and a gel is precipitated. The ice bath is then removed and replaced with a water bath maintained at 23°C. The flask remains in the water bath under constant agitation for 30 minutes and is slowly re-heated to room temperature.

The mixture is then poured through a filter and the solvent is collected. The precipitated gel is washed with an additional 50 ml of clean xylene. An aliquot of 200 ml of the filtrate is taken and poured into a 250 ml round-bottom flask. The solvent is removed by evaporation until constant weight is obtained.

Calculation of the xylene cold soluble content (XS):

$$XS[wt\%] = \frac{(m_{XS} - m_{RBF}) \times \frac{V_{XYL}}{V_{SAMPLE}}}{m_P} \times 100wt\%$$

$$V_{XYL} = \frac{m_{XYL}}{\rho_{XYL}}$$

with $m_p$: mass (g) of sample, $m_{XYL}$: mass (g) of total xylene used, $\rho_{XYL}$: density (g/ml) of xylene used, $m_{RBF}$: mass (g) of 250 ml empty round bottom flask, mxs: mass (g) of 250 ml round bottom flask with residue, $V_{XYL}$: volume (ml) of total xylene used, $V_{SAMPLE}$: volume (ml) of aliquot in 250 ml round bottom flask.

According to the present invention, preferably in equation (1) XS is ≤5.5wt%, more preferably ≤5.0wt%, still more preferably ≤4.5wt%, even more preferably ≤4.0wt%, still even more preferably ≤3.5wt%, still even more preferably ≤3.0wt%, still even more preferably ≤2.5wt% and most preferably XS is ≤2.4wt%.

According to the present invention, the term "PI" means rheological polydispersity index. The PI is determined as follows. Rheological oscillatory frequency sweep experiments are performed on compression-molded disks using a parallel-plate geometry at 210°C, oscillatory strain amplitude $\gamma_0$ = 10%, angular frequency $\omega$ = 389 to 0.1 rad/s, and a DHR-2 rheometer (TA Instruments, New Castle, USA). The storage modulus G' and loss modulus G" data is analyzed by performing a least squares polynomial fit: ln(G') = $a_2 \times$[ln(G")]$^2$ + $a_1 \times$ln(G") + $a_0$. The cross-over modulus Gc is calculated from the fit parameters by:

$$G_C = \exp\left[\frac{1 - a_1 + \sqrt{(a_1 - 1)^2 - 4a_2 a_0}}{2a_2}\right]$$

The rheological polydispersity index (PI) is calculated from the calculated cross-over modulus Gc:

$$PI = \frac{10^5 \text{Pa}}{G_c}$$

According to the present invention, the term "PI ratio" is defined according to the following equation (2):

$$PI\ ratio = \frac{PI}{-0.679 \times \log\left(\frac{MFR}{g/10min}\right) + 3.9} \qquad (2)$$

wherein

PI represents the rheological polydispersity index; and
MFR represents the melt mass-flow rate in g/10min.

Preferably, in equations (1) and (2) the PI ratio is of from 0.90 to 1.23, more preferably the PI ratio is of from 0.91 to 1.20, still more preferably of from 0.92 to 1.18, even more preferably of from 0.93 to 1.16, even still more preferably of from 0.94 to 1.14, and most preferably the PI ratio is of from 0.95 to 1.13.

According to the present invention, the term "MFR" means melt mass-flow rate. The melt mass-flow rates are determined according to ISO 1133 at 230°C and a load of 2.16 kg.

Preferably, in equation (2) the MFR (230°C, 2.16 kg, ISO 1133) is of from 0.1 to 200 g/10 min, more preferably of from 0.2 to 190 g/10 min, still more preferably of from 0.3 to 180 g/10min, even more preferably of from 0.5 to 170 g/10min, still even more preferably of from 0.6 to 160 g/10 min, still even more preferably of from 0.7 to 150 g/10 min, most preferably of from 0.8 to 140 g/10 min.

The component a) which is the composition according to the present invention comprising i) and ii) has a specific profile of properties ($T_3$, $T_C$, XS, PI ratio, MFR) which is useful for providing polymer blends having a high content of recycled material and specifically recycled polymers, wherein the polymer blend has excellent material properties which are comparable or even better to fully virgin polymer compositions, and wherein the polymer blend has a low manufacturing complexity and a reduced carbon footprint. The specific profile of properties of component a) is expressed in equation (1) described above and which results in the Relation I value.

According to the present invention, in equation (1) the Relation I value is >4.0, preferably >5.0, more preferably >6.0, still more preferably >7.0, even more preferably >8.0, still even more preferably >9.0, still even more preferably >9.5 and most preferably the Relation I value is ≥9.6.

Preferably, the Relation I value is of from >4.0 to <30, more preferably of from >5.0 to <25, more preferably of from >6.0 to <20, still more preferably of from >7.0 to <18, even more preferably of from >8.0 to <16, still even more preferably of from >9.0 to <14, and most preferably the Relation I value is of from >9.5 to <13.5.

According to the present invention, preferably in equation (1) $T_3$ is of from 115.5°C to 140.0°C, $T_c$ is of from 115.0°C to 145.0°C, XS is ≤5.5wt%, the PI ratio is of from 0.90 to 1.23, in equation (2) MFR is of from 0.1 to 200g/10min, and in equation (1) Relation I is a value of >4.0, more preferably $T_3$ is of from 116.0°C to 135.0°C, $T_c$ is of from 117.0°C to 140.0°C, XS is ≤5.0wt%, the PI ratio is of from 0.91 to 1.20, MFR is of from 0.2 to 190g/10min, and Relation I is a value of >5.0, most preferably $T_3$ is of from 117.3°C to 120.0°C, Tc is of from 129.0°C to 135.0°C, XS is ≤2.4wt%, the PI ratio is of from 0.95 to 1.13, MFR is of from 0.8 to 140g/10min, and Relation I is a value of ≥9.6.

i) The one or more polypropylene polymer(s)

Preferably, the i) one or more polypropylene polymer(s) are homopolymers.

For example, the combination of properties of the composition according to a) can be achieved by using a non-phthalate catalyst based on 2-isopropyl-2-isopentyl-1,3-dimethoxypropane (I3I5) from the group of 1,3-diethers as internal donor for the polymerization of propylene in combination with external donors and dedicated additives.

Preferably, the i) one or more polypropylene polymer(s) are obtained by performing a propylene polymerization in a vertically-stirred gas phase reactor of the Novolen type using a stereospecific MgCh-xROH-supported Ziegler-Natta catalyst containing a 1,3-diether-based internal donor (ID) at 30 bar and 75°C and by using an external donor such as isobutyl(isopropyl)dimethoxysilane (CAS 111439-76-0) to achieve high isotacticity levels. The 1,3-diether-based internal donor is preferentially a 2-isopropyl-2-isopentyl-1,3 dimethoxypropane (CAS 129228-11-1) and the ID/Mg ratio is preferentially 0.19.

Preferably, the i) one or more polypropylene polymer(s) are produced using a Ziegler-Natta catalyst having an internal donor selected from the group of diethers, aliphatic diesters, aromatic diesters, succinates, citraconates, maleates, dibenzoates, preferably from the group of 1,3-diethers.

Preferably, the i) one or more polypropylene polymer(s) are produced using a Ziegler-Natta catalyst with a ratio between the internal donor and magnesium (ID/Mg) of from 0.14 to 0.40, more preferably of from 0.16 to 0.35, still more preferably of from 0.18 to 0.30, still even more preferably of from 0.18 to 0.25, still even more preferably of from 0.18 to 0.20 and most preferably with a ratio between the internal donor and magnesium (ID/Mg) of 0.19.

Preferably, the i) one or more polypropylene polymer(s) are produced using a Ziegler-Natta catalyst with an internal donor as described above in combination with an external donor selected from the group of alkoxy silanes, preferably from the group of dimethoxysilanes, most preferably the external donor is isobutyl(isopropyl)dimethoxysilane (CAS 111439-76-0).

Preferably, the i) one or more polypropylene polymer(s) are produced using ii) one or more additive(s) to achieve high process stability and enhanced performance of the overall compositions.

Preferably, the component a) comprises the i) one or more polypropylene polymer(s) in an amount of from 50wt% to 99.95wt% with respect to the total weight of the composition according to a), more preferably of from 55wt% to 99.92wt%, still more preferably of from 60wt% to 99.90wt%, even more preferably of from 65wt% to 99.88wt%, still even more preferably of from 70wt% to 99.85wt%, still even more preferably of from 75wt% to 99.85wt%, still even more preferably of from 80wt% to 99.85wt%, still even more preferably of from 85wt% to 99.85wt%, still even more preferably of from 90wt% to 99.85wt%, still even more preferably of from 95wt% to 99.85, still even more preferably of from 96wt% to 99.85wt%, still even more preferably of from 97wt% to 99.85wt%, still even more preferably of from 98wt% to 99.85wt% and most preferably of from 98.5wt% to 99.85wt% with respect to the total weight of the composition according to component a).

ii) The one or more additive(s)

The composition of the present invention according to component a) is produced using one or more additive(s) to achieve high process stability and enhanced performance of the compositions and polymer blends.

The one or more additive(s) are selected from the group consisting of antioxidants, acid scavengers, antistatic agents, nucleating agents, clarifiers, slip agents, and antiblocking agents.

According to the present invention the antioxidants may be any suitable antioxidants known in the art. Preferably, antioxidants are selected from the group consisting of phenolic antioxidants, amine antioxidants, hydroxylamine antioxidants, phosphite antioxidants, phosphonite antioxidants, benzofuranone antioxidants, thiodipropionate antioxidants, acryloyl antioxidants and combinations thereof. For example, the phenolic antioxidants may comprise one or more sterically hindered phenolic compounds. Exemplary compounds for sterically hindered phenolic compounds may be pentaerythritol tetrakis[3-[3,5-di-tert-butyl-4-hydroxyphenyl] propionate (AO-1010), 1,3,5-trimethyl-2,4,6-tris(3,5-di-tert-butyl-4-hydroxybenzyl)benzene (AO-1330), and 1,3,5-tris(3,5-di-tert-butyl-4-hydroxybenzyl)-1,3,5-triazine-2,4,6(1H,3H,SH)-trione (AO-3114). For example, the amine antioxidants may comprise hindered amine compounds. Exemplary compounds may be poly(4-hydroxy-2,2,6,6-tetramethyl-1-piperidine ethanol-alt-1,4-butanedioic acid) (HAS 622), bis(2,2,6,6-tetramethyl-4-piperidyl) sebacate (HAS 770), and poly[[6-[(1, 1,3,3-tetramethylbutyl)amino]-s-triazine-2,4-diyl]-[(2,2,6,6-tetramethyl-4-piperidyl)imino]-hexamethylene-[(2,2,6,6-tetramethyl-4-piperidyl)imino] (HAS 944). For example, the hydroxylamine antioxidants may comprise oxidized bis(hydrogenated tallow alkyl) amines. An exemplary compound may be bis(octadecyl)hydroxylamine (FS 042). For example, the phosphite antioxidants may comprise phosphite esters. Exemplary compounds may be tris(2,4-di-tert-butylphenyl)phosphite (AO-168), 3,9-bis(2,4-dicumylphenoxy)-2,4,8,10-tetraoxa-3,9-diphosphaspiro [5.5]undecane, and bis(2,6-di-ter-butyl-4-methylphenyl) pentaerythritoldiphosphite. For example, the phosphonite antioxidants may comprise phosphonite esters. An exemplary compound may be tetrakis(2,4-di-tert-butylphenyl)[1,1'-biphenyl]-4,4'-diylbis(phosphonite) (PEPQ). For example, the benzofuranone antioxidants may comprise 3-arylbenzofuranones. An exemplary compound may be 5,7-di-tert-butyl-3-(3,4-dimethylphenyl)3H-benzofuran-2-one. For example, the thiodipropionate antioxidants may comprise thiodipropionic acid alkyl esters. An exemplary compound may be 3,3'-thiodipropionic acid dioctadecylester. For example, the acryloyl antioxidants may comprise acryloyl modified phenols. An exemplary compound may be 2-(1,1-dimethylethyl)-6-[[3-(1,1-dimethylethyl)-2-hydroxy-5-methylphenylymethyl-4-methylphenyl acrylate.

According to the present invention the acid scavengers may be any suitable acid scavengers known in the art. Acid scavengers are selected from the group consisting of metallic stearates, hydrotalcites, hydrocalumites, metallic oxides, metallic carbonates and combinations thereof. For example, the metallic stearates may comprise calcium stearate and zinc stearate. For example, the hydrotalcites may comprise $Mg_{4.3}Al_2(OH)_{12.6}CO_3 \bullet mH_2O$ (DHT). For example, the hydrocalumites may comprise $[Ca_2Al(OH)_6]OH \bullet mH_2O$, $[Ca_2Al(OH)_6]CO_3 \bullet mH_2O$, $[Ca_2Al(OH)_6]HPO_3 \bullet mH_2O$, $[Ca_2Al(OH)_6]SO_4 \bullet mH_2O$, $[Ca_2Al(OH)_6]Cl \bullet mH_2O$ and combinations thereof. For example, the metallic oxides may comprise zinc oxide, calcium oxide, magnesium oxide and combinations thereof. For example, the metallic carbonates may comprise zinc carbonate, calcium carbonate, magnesium carbonate and combinations thereof.

According to the present invention the nucleating agents or clarifiers may be any suitable nucleating agents or clarifiers known in the art. Furthermore, nucleating agents or clarifiers are preferentially used, which can be selected from the group consisting of talc, metal benzoates, metal sulfates, carboxylic acid salts, phosphate ester salts, sorbitol-based clarifiers, nonitol-based clarifiers and combinations thereof. For example, the metal benzoates may comprise sodium benzoate, lithium benzoate and aluminium hydroxy bis-(4-tert-butyl) benzoate. For example, the metal sulfates may comprise barium sulfate. For example, the carboxylic acid salts may comprise 1,2-cyclohexane dicarboxylic acid metal salts and bicyclo [2.2.1] heptane- 2,3-dicarboxylic acid metal salts. For example, the phosphate ester salts may comprise lithium 2,2'-methylene-bis-(4,6-di-tert-butylphenyl) phosphate, sodium 2,2'-methylene-bis-(4,6-di-tert-butylphenyl) phosphate, aluminium hydroxy 2,2'-methylene-bis-(4,6-di-tert-butylphenyl) phosphate. For example, the sorbitol-based clarifiers may comprise 1,3:2,4-bis(3,4-dimethylbenzylidene)sorbitol (DMDBS), 1,3:2,4-bis(p-methyl-benzylidene) sorbitol (MDBS), 1,3:2,4-dibenzylidene sorbitol (DBS). For example, the nonitol-based clarifiers may comprise 1,2,3-tridesoxy-4,6:5,7-bis-O-[(4-propylphenyl) methylene]nonitol. Commercial examples for nucleating agents and clarifiers include Milliken HPN-600ei, Milliken HPN-68L, Milliken HPN-20E, Milliken HPN-715, Milliken Millad 3988, Milliken Millad NX 8000, Adeka MI.NA.08, Adeka NA-11, Adeka NA-21, Adeka NA-27, Adeka NA-71.

According to the present invention the antistatic agents may be any suitable antistatic agents known in the art. Antistatic agents include glycerol monostearates (GMS-55, GMS-90) or ethoxylated alkyl amines.

According to the present invention the slip agents may be any suitable slip agents known in the art. Slip agent include erucamides and oleamides.

According to the present invention the antiblocking agents may be any suitable antiblocking agents known in the art. Antiblocking agents include silica.

Preferably, the ii) one or more additive(s) are antioxidants, acid scavengers and nucleating agents, more preferably the ii) one or more additive(s) are antioxidants, acid scavengers, antistatic agents and nucleating agents, still more preferably the ii) one or more additive(s) are antioxidants, acid scavengers, antistatic agents, nucleating agents and clarifiers, even more preferably the ii) one or more additive(s) are antioxidants, acid scavengers, antistatic agents, nucleating agents, clarifiers and slip agents, most preferably the ii) one or more additive(s) are antioxidants, acid scavengers, antistatic agents, nucleating agents, clarifiers, slip agents and antiblocking agents.

The polymer blend according to the present invention based on component a) comprising i) one or more polypropylene polymer(s) and ii) one or more additives as defined herein, and b) the one or more recycled polymer(s) provides better material properties, reduced carbon footprint, and a more efficient use of natural resources compared to state-of-the-art compositions based on recycled polymers. Furthermore, the polymer blend according to the present invention offers comparable or even better material properties compared to fully virgin polymer compositions, while the carbon footprint of the composition and the manufacturing complexity of the present invention is significantly lower.

Preferably, the component a) comprises the ii) one or more additive(s) in an amount of from 0.05 to 5wt% of the total weight of the composition according to component a), more preferably of from 0.08 to 4wt%, still more preferably of from 0.10 to 3wt%, even more preferably of from 0.12 to 2wt%, most preferably the component a) comprises the ii) one or more additive(s) in an amount of from 0.15 to 1.5wt% of the total weight of the composition according to component a).

Preferably, in the polymer blend of the present invention the component a) comprising i) and ii) is present in an amount of from 1wt% to 99wt% of the total weight of the polymer blend, more preferably of from 2wt% to 90wt%, still more preferably of from 2wt% to 80wt%, even more preferably of from 2wt% to 70wt%, still even more preferably of from 2wt% to 60wt%, still even more preferably of from 3wt% to 55wt%, still even more preferably of from 4wt% to 50wt%, still even more preferably of from 5wt% to 50wt%, still even more preferably of from 10wt% to 50wt%, still even more preferably of from 15 wt% to 50wt%, and most preferably the component a)is present in an amount of from 15wt% to 45wt% of the total weight of the polymer blend.

Component b)

According to the present invention, the terms "recycled polymer" or "recycled" mean that the material or specifically the polymer is recovered from post-consumer waste or industrial waste. Post-consumer waste refers to objects having completed at least a first use cycle (or life cycle), i.e., having already served their first purpose; while industrial waste refers to manufacturing scrap, which does not normally reach a customer. The "recycled polymer" according to the present invention may also comprise up to 20wt%, preferably up to 17wt%, more preferably up to 3wt%, still more preferably up to 1wt% and most preferably up to 0.1wt% of other components originating from the first use.

According to the present invention, the terms "polypropylene-based polymer" and "polypropylene-based polymer(s)" denote polypropylene homopolymers, polypropylene copolymers and blends comprising polypropylene homopolymers and/or polypropylene copolymers.

According to the present invention, the recycled polymer composition(s) may be obtained from recycled waste by means of plastic recycling processes known in the art. Such recycled polymer composition(s) are commercially available, e.g., from Systec Plastics GmbH (Germany), Interzero GmbH & Co. KG (Germany), Resource Plastics Corp. (Canada), Kruschitz GmbH, Plastics and Recycling (Austria), Vogt Plastik GmbH (Germany), mtm Plastics GmbH (Germany), CT Polymers (USA), etc. None exhaustive examples of recycled polymers are Systalen PP (Systec Plastics GmbH) and DIPOLEN PP (mtm Plastics GmbH). It is considered that the present invention could be applicable to a broad range of recycled polymer composition(s). The recycled polymer composition(s) may be in the form of pellets.

Preferably, according to the present invention the component b) one or more recycled polymer composition(s) have a MFR value (230°C, 2.16 kg, ISO 1133 determined as described above) of from 1 to 200 g/10 min, more preferably of from 2 to 150 g/10 min, still more preferably of from 3 to 120 g/10min, even more preferably of from 4 to 100 g/10min, still even more preferably of from 5 to 80 g/10 min, still even more preferably of from 6 to 60 g/10 min, still even more preferably of from 7 to 50 g/10 min, still even more preferably of from 8 to 40 g/10 min, still even more preferably of from 9 to 35 g/10 min, still even more preferably of from 10 to 30 g/10 min, most preferably of from 12 to 25 g/10 min.

According to the present invention, "ethylene content" refers to the fraction in wt% of $C_2H_4$ units in the polymers derived from the polymerization of ethylene. Ethylene contents are determined by Fourier Transform Infrared (FTIR) spectroscopy on $200 \pm 50$ $\mu$m films using a Tensor 27 FTIR spectrometer (Bruker Corp., USA). The films are prepared using a hot press at 200°C and 50 bar, and the spectral absorption is corrected for actual film thickness. The FTIR spectra are acquired in the mid infrared region of 4000 - 400 $cm^{-1}$ and the band between 750 - 700 $cm^{-1}$ is evaluated using a partial least-squares (PLS) algorithm in comparison to spectra of reference samples that were calibrated by 13C NMR (Haaland et al. Anal. Chem. 1988, 60, 1193-1202).

Preferably, according to the present invention the component b) one or more recycled polymer composition(s) have an ethylene content of <50wt%, more preferably of <45wt%, still more preferably of <40wt%, even more preferably of <35wt%, still even more preferably of <30wt%, still even more preferably of <25wt%, still even more preferably of <20wt%, still even more preferably of <18wt%, still even more preferably of <17wt%, still even more preferably of <16wt%, most preferably the b) one or more recycled polymer composition(s) have an ethylene content of <15wt%.

According to the present invention, the "polypropylene homopolymer and/or copolymer content" refers to the fraction in wt% of polypropylene-based input material selected for the preparation of the component b) one or more recycled polymer composition(s).

Preferably, according to the present invention the component b) one or more recycled polymer composition(s) have a polypropylene homopolymer and/or copolymer content of >50wt%, more preferably of >55wt%, still more preferably of >60wt%, even more preferably of >65wt%, still even more preferably >70wt%, still even more preferably of >75wt%, still even more preferably of >80wt% and most preferably of from 85 to 100wt%.

Preferably, according to the present invention the component b) one or more recycled polymer composition(s) have a post-consumer waste content of ≥0wt%, more preferably of ≥10wt%, still more preferably of ≥30wt%, even more preferably of ≥50wt%, still even more preferably of ≥60wt%, still even more preferably of ≥70wt%, still even more preferably of ≥80wt%, still even more preferably of ≥90wt%, still even more preferably of ≥92wt%, still even more preferably of ≥95wt%, still even more preferably of ≥97wt%, still even more preferably of ≥98wt%, and most preferably the b) one or more recycled polymer composition(s) have a post-consumer waste content of ≥99wt%.

Preferably, according to the present invention the component b) one or more recycled polymer composition(s) have a $T_C$ (ISO 11357-3) of from 90°C to 140°C, more preferably of from 95°C to 135°C, still more preferably of from 100°C to 130°C, even more preferably of from 105°C to 128°C, still even more preferably of from 110°C to 127°C, still even more preferably of from 112°C to 126°C, still even more preferably of from 114°C to 126°C, still even more preferably of from 116°C to 126°C, still even more preferably of from 118°C to 126°C, still even more preferably of from 120°C to 126°C, still even more preferably of from 122°C to 126°C, and most preferably the b) one or more recycled polymer composition(s) have a $T_C$ (ISO 11357-3) of from 123°C to 126°C.

Preferably, according to the present invention the component b) one or more recycled polymer composition(s) have a flexural modulus (ISO 178) of <2200 MPa, more preferably of <2000 MPa, still more preferably of <1800 MPa, even more preferably of <1700 MPa, still even more preferably of <1600 MPa, still even more preferably of <1500 MPa, still even more preferably of <1400 MPa, still even more preferably of <1300 MPa, still even more preferably of <1250 MPa, most preferably the b) one or more recycled polymer composition(s) have a flexural modulus (ISO 178) of <1200 MPa.

Preferably, according to the present invention the component b) one or more recycled polymer composition(s) have a Charpy (notched) 23°C (ISO 179-1) of from >1.5 kJ/m$^2$ to <80 kJ/m$^2$, more preferably of from >2.0 kJ/m$^2$ to <70 kJ/m$^2$, still more preferably of from >2.5 kJ/m$^2$ to <60 kJ/m$^2$, even more preferably of from >3.0 kJ/m$^2$ to <50 kJ/m$^2$, still even more preferably of from >3.5 kJ/m$^2$ to <40 kJ/m$^2$, still even more preferably of from >4.0 kJ/m$^2$ to <30 kJ/m$^2$, still even more preferably of from >4.5 kJ/m$^2$ to <20 kJ/m$^2$, still even more preferably of from >5.0 kJ/m$^2$ to <15 kJ/m$^2$, still even more preferably of from >5.0 kJ/m$^2$ to <10 kJ/m$^2$, still even more preferably of from >5.0 kJ/m$^2$ to <8 kJ/m$^2$, still even more preferably of from >5.0 kJ/m$^2$ to <7 kJ/m$^2$, and most preferably the b) one or more recycled polymer composition(s) have a Charpy (notched) 23°C (ISO 179-1) of from >5.0 kJ/m$^2$ to <6 kJ/m$^2$.

Preferably, in the polymer blend of the present invention the component b) one or more recycled polymer composition(s) are present in an amount of from >0wt% to <100wt% of the total weight of the polymer blend, more preferably of from 10 to 99wt%, still more preferably of from 20 to 98wt%, even more preferably of from 30 to 95wt%, still even more preferably of from 40 to 95wt%, still even more preferably of from 45 to 95wt%, still even more preferably of from 50 to 95wt%, and still even more preferably of from 50 to 92wt%, still even more preferably of from 50 to 90wt%, still even more preferably of from 50 to 88wt%, and most preferably the b) one or more recycled polymer composition(s) are present in an amount of from 55wt% to 85wt% of the total weight of the polymer blend.

Component c)

Preferably the polymer blend according to the present invention further comprises component c):
c) one or more additive(s) selected from the group consisting of antioxidants, acid scavengers, antistatic agents, nucleating agents, clarifiers, slip agents, and antiblocking agents.

More preferably the polymer blend according to the present invention further comprises component c) wherein the one or more additive(s) are selected from the group consisting of antioxidants and acid scavengers. Most preferably the polymer blend according to the present invention further comprises component c) wherein the one or more additive(s) are antioxidants and acid scavengers.

The antioxidants, acid scavengers, antistatic agents, nucleating agents, clarifiers, slip agents, and antiblocking agents according to component c) are defined as for the ii) one or more additives above.

**The Method of preparing the Polymer Blend**

The present invention relates to a method of preparing the polymer blend according to the present invention comprising the step:

I) Mixing the components a) and b).

The components a) and b) may be mixed by any suitable method known in the art for mixing polymers. Preferably, the components a) and b) are mixed using an extruder or a tumble mixer.

Preferably, the method of preparing the polymer blend according to the present invention further comprises the step:

0) Preparing the composition according to component a) including synthesizing the i) one or more polypropylene polymer(s).

More preferably, the method of preparing the polymer blend according to the present invention further comprises the step:

0) Preparing the composition according to component a) including synthesizing the i) one or more polypropylene polymer(s); wherein the i) one or more polypropylene polymer(s) are synthesized by performing a propylene polymerization in a vertically-stirred gas phase reactor of the Novolen type using a stereospecific $MgCl_2$-xROH-supported Ziegler-Natta catalyst containing a non-phthalate internal donor (ID) at 30 bar and 75°C and by using an external donor.

Preferably, in step 0) as described above the internal donor is selected from the group consisting of diethers, aliphatic diesters, aromatic diesters, succinates, citraconates, maleates, dibenzoates, even more preferably from the group of 1,3-diethers, and most preferably the internal donor is 2-isopropyl-2-isopentyl-1,3 dimethoxypropane (CAS 129228-11-1).

Preferably, the i) one or more polypropylene polymer(s) is synthesized in step 0) as described above using a Ziegler-Natta catalyst with a ratio between the internal donor and magnesium (ID/Mg) of from 0.14 to 0.40, more preferably of from 0.16 to 0.35, still more preferably of from 0.18 to 0.30, still even more preferably of from 0.18 to 0.25, still even more preferably of from 0.18 to 0.20 and most preferably with a ratio between the internal donor and magnesium (ID/Mg) of 0.19.

Most preferably, in step 0) the internal donor is 2-isopropyl-2-isopentyl-1,3 dimethoxypropane (CAS 129228-11-1) and the ID/Mg ratio is 0.19.

Preferably, the i) one or more polypropylene polymer(s) is synthesized using a Ziegler-Natta catalyst with an internal donor as described above in combination with an external donor selected from the group of alkoxy silanes, preferably from the group of dimethoxysilanes, most preferably the external donor is isobutyl(isopropyl)dimethoxysilane (CAS 111439-76-0).

Even more preferably, step I) of the method of preparing the polymer blend according to the present invention is step I*) Mixing the components a), b) and c).

More preferably, the method of the present invention comprises the steps of:

0) Preparing the composition according to component a) including synthesizing the i) one or more polypropylene polymer(s) according to the present invention; wherein the i) one or more polypropylene polymer(s) are synthesized by performing a propylene polymerization in a vertically-stirred gas phase reactor of the Novolen type using a stereospecific MgCh-xROH-supported Ziegler-Natta catalyst containing a non-phthalate internal donor (ID) at 30 bar and 75°C and by using an external donor;

wherein the internal donor is 2-isopropyl-2-isopentyl-1,3 dimethoxypropane, the ID/Mg ratio is 0.19, and the external donor is isobutyl(isopropyl)dimethoxysilane;
and wherein the ii) one or more additive(s) as described below in section "The Composition" are mixed with the i) one or more polypropylene polymer(s); and

I) Mixing the components a) and b).

Most preferably, the method of the present invention comprises the steps of:

0) Preparing the composition according to component a) including synthesizing the i) one or more polypropylene polymer(s) according to the present invention; wherein the i) one or more polypropylene polymer(s) are synthesized by performing a propylene polymerization in a vertically-stirred gas phase reactor of the Novolen type using a stereospecific MgCh-xROH-supported Ziegler-Natta catalyst containing a non-phthalate internal donor (ID) at 30 bar and 75°C and by using an external donor;

wherein the internal donor is 2-isopropyl-2-isopentyl-1,3 dimethoxypropane, the ID/Mg ratio is 0.19, and the external donor is isobutyl(isopropyl)dimethoxysilane;

and wherein the ii) one or more additive(s) as described below in section "The Composition" are mixed with the i) one or more polypropylene polymer(s); and

I*) Mixing the components a), b) and c).

## The Composition

The present invention relates to a composition comprising:

i) one or more polypropylene polymer(s),
ii) one or more additive(s) selected from the group consisting of antioxidants, acid scavengers, antistatic agents, nucleating agents, clarifiers, slip agents, and antiblocking agents;

whereby the composition according to a) is characterized by the following equation (1):

$$Relation\ I = \frac{T_3 + T_c - 225°C}{PI\ ratio \times \frac{XS}{wt\%} \times °C} \qquad (1)$$

wherein
Relation I is a value of >4.0;
$T_3$ is the peak maximum temperature in °C determined by analytical temperature rising elution fractionation method;
$T_c$ is the peak crystallization temperature in °C;
XS represents the xylene cold soluble content of the composition in wt%; and the PI ratio is defined according to the following equation (2):

$$PI\ ratio = \frac{PI}{-0.679 \times \log\left(\frac{MFR}{g/10min}\right) + 3.9} \qquad (2)$$

wherein
PI represents the rheological polydispersity index; and
MFR represents the melt mass-flow rate in g/10min.

"$T_3$" is determined as described above.
According to the present invention, preferably in equation (1) $T_3$ is of from 115.5°C to 140.0°C, more preferably of from 116.0°C to 135.0°C, still more preferably of from 116.5°C to 130.0°C, even more preferably of from 117.0°C to 125.0°C, even still more preferably of from 117.2°C to 122.0°C and most preferably $T_3$ is of from 117.3°C to 120.0°C.
"$T_c$" is determined as described above.
According to the present invention, preferably in equation (1) $T_c$ is of from 115.0°C to 145.0°C, more preferably of from 117.0°C to 140.0°C, still more preferably of from 119.0°C to 139.0°C, even more preferably of from 120.0°C to 138.0°C, even still more preferably of from 122.0°C to 137.0°C, even still more preferably of from 125.0°C to 136.0°C, even still more preferably of from 127.0°C to 135.0°C, most preferably of from 129.0°C to 135.0°C.
"XS" is determined as described above.
According to the present invention, preferably in equation (1) XS is ≤5.5wt%, more preferably ≤5.0wt%, still more preferably ≤4.5wt%, even more preferably ≤4.0wt%, still even more preferably ≤3.5wt%, still even more preferably ≤3.0wt%, still even more preferably ≤2.5wt% and most preferably XS is ≤2.4wt%.
"PI" and the "PI ratio" are determined as described above.
Preferably, in equation (1) the PI ratio is of from 0.90 to 1.23, more preferably the PI ratio is of from 0.91 to 1.20, still more preferably of from 0.92 to 1.18, even more preferably of from 0.93 to 1.16, even still more preferably of from 0.94 to 1.14, and most preferably the PI ratio is of from 0.95 to 1.13.
"MFR" is determined as described above.
Preferably, in equation (2) the MFR (230°C, 2.16 kg, ISO 1133) is of from 0.1 to 200 g/10 min, more preferably of from 0.2 to 190 g/10 min, still more preferably of from 0.3 to 180 g/10min, even more preferably of from 0.5 to 170 g/10min, still even more preferably of from 0.6 to 160 g/10 min, still even more preferably of from 0.7 to 150 g/10 min, most preferably of from 0.8 to 140 g/10 min.

The composition according to the present invention has a specific profile of properties ($T_3$, $T_c$, XS, PI ratio, MFR) which is useful for providing polymer blends having a high content of recycled material and specifically recycled polymers, wherein the polymer blend has excellent material properties which are comparable or even better to fully virgin polymer compositions, and wherein the polymer blend has a low manufacturing complexity and a reduced carbon footprint. The specific profile of properties of the composition according to the present invention is expressed in equation (1) described above and results in the Relation I value.

According to the present invention, the Relation I value is >4.0, preferably >5.0, more preferably >6.0, still more preferably >7.0, even more preferably >8.0, still even more preferably >9.0, still even more preferably >9.5 and most preferably the Relation I value is ≥9.6.

Preferably, the Relation I value is of from >4.0 to <30, more preferably of from >5.0 to <25, more preferably of from >6.0 to <20, still more preferably of from >7.0 to <18, even more preferably of from >8.0 to <16, still even more preferably of from >9.0 to <14, and most preferably the Relation I value is of from >9.5 to <13.5.

According to the present invention, preferably in equation (1) $T_3$ is of from 115.5°C to 140.0°C, $T_c$ is of from 115.0°C to 145.0°C, XS is ≤5.5wt%, the PI ratio is of from 0.90 to 1.23, in equation (2) MFR is of from 0.1 to 200g/10min, and in equation (1) Relation I is a value of >4.0, more preferably $T_3$ is of from 116.0°C to 135.0°C, $T_c$ is of from 117.0°C to 140.0°C, XS is ≤ 5.0wt%, the PI ratio is of from 0.91 to 1.20, MFR is of from 0.2 to 190g/10min, and Relation I is a value of >5.0, most preferably $T_3$ is of from 117.3°C to 120.0°C, $T_c$ is of from 130.2°C to 140.0°C, XS is ≤2.4wt%, the PI ratio is of from 0.95 to 1.13, MFR is of from 0.8 to 140g/10min, and Relation I is a value of ≥9.6.

Preferably, the i) one or more polypropylene polymer(s) of the composition according to the present invention is a homopolymer.

For example, the combination of properties of the composition according to the present invention can be achieved by using a non-phthalate catalyst based on 2-isopropyl-2-isopentyl-1,3-dimethoxypropane (I3I5) from the group of 1,3-diethers as internal donor for the polymerization of propylene in combination with external donors and dedicated additives.

Preferably, the i) one or more polypropylene polymer(s) of the composition according to the present invention is obtained by performing a propylene polymerization in a vertically-stirred gas phase reactor of the Novolen type using a stereospecific MgCh-xROH-supported Ziegler-Natta catalyst containing a 1,3-diether-based internal donor (ID) at 30 bar and 75°C and by using an external donor such as isobutyl(isopropyl)dimethoxysilane (CAS 111439-76-0) to achieve high isotacticity levels.

Preferably, the i) one or more polypropylene polymer(s) of the composition according to the present invention is produced using a Ziegler-Natta catalyst having an internal donor selected from the group of diethers, aliphatic diesters, aromatic diesters, succinates, citraconates, maleates, dibenzoates, preferably from the group of 1,3-diethers.

Preferably, the i) one or more polypropylene polymer(s) is produced using a Ziegler-Natta catalyst with a ratio between the internal donor and magnesium (ID/Mg) of from 0.14 to 0.40, more preferably of from 0.16 to 0.35, still more preferably of from 0.18 to 0.30, still even more preferably of from 0.18 to 0.25, still even more preferably of from 0.18 to 0.20 and most preferably with a ratio between the internal donor and magnesium (ID/Mg) of 0.19.

Most preferably, the 1,3-diether-based internal donor is 2-isopropyl-2-isopentyl-1,3 dimethoxypropane (CAS 129228-11-1) and the ID/Mg ratio is 0.19.

Preferably, the i) one or more polypropylene polymer(s) is produced using a Ziegler-Natta catalyst with an internal donor as described above in combination with an external donor selected from the group of alkoxy silanes, preferably from the group of dimethoxysilanes, most preferably the external donor is isobutyl(isopropyl)dimethoxysilane (CAS 111439-76-0).

Preferably, the i) one or more polypropylene polymer(s) is mixed with one or more additive(s) to achieve high process stability and enhanced performance of the overall compositions.

Preferably, the ii) one or more additive(s) for mixing with the i) one or more polypropylene polymer(s) are used in an amount of from 0.05 to 5wt% of the total weight of the composition of the present invention, more preferably of from 0.08 to 4wt%, still more preferably of from 0.10 to 3wt%, even more preferably of from 0.12 to 2wt%, most preferably the polypropylene polymer according to the present invention comprises one or more additive(s) in an amount of from 0.15 to 1.5wt% of the total weight of the composition of the present invention.

Additives can include for example antioxidants, acid scavengers, antistatic agents, nucleating agents, clarifiers, slip agents, or antiblocking agents.

According to the present invention the antioxidants may be any suitable antioxidants known in the art. Preferably, antioxidants are selected from the group consisting of phenolic antioxidants, amine antioxidants, hydroxylamine antioxidants, phosphite antioxidants, phosphonite antioxidants, benzofuranone antioxidants, thiodipropionate antioxidants, acryloyl antioxidants and combinations thereof. For example, the phenolic antioxidants may comprise one or more sterically hindered phenolic compounds. Exemplary compounds for sterically hindered phenolic compounds may be pentaerythritol tetrakis[3-[3,5-di-tert-butyl-4-hydroxyphenyl] propionate (AO-1010), 1,3,5-trimethyl-2,4,6-tris(3,5-di-tert-butyl-4-hydroxybenzyl)benzene (AO-1330), and 1,3,5-tris(3,5-di-tert-butyl-4-hydroxybenzyl)-1,3,5-triazine-2,4,6(1H,3H,SH)-trione (AO-3114). For example, the amine antioxidants may comprise hindered amine compounds. Exemplary compounds may be poly(4-hydroxy-2,2,6,6-tetramethyl-1-piperidine ethanol-alt-1,4-butanedioic acid) (HAS 622), bis(2,2,6,6-tetramethyl-4-piperidyl) sebacate (HAS 770), and poly[[6-[(1,1,3,3-tetramethylbutyl)amino]-s-triazine-2,4-diyl]-[(2,2,6,6-tetramethyl-4-piperidyl)imino]-hexamethylene-[(2,2,6,6-tetramethyl-4-piperidyl)imino] (HAS 944). For example, the hydroxylamine antioxidants may comprise oxidized bis(hydrogenated tallow alkyl) amines. An exemplary compound may be bis(octadecyl)hydroxylamine (FS 042). For example, the phosphite antioxidants may comprise phosphite esters. Exemplary compounds may be tris(2,4-di-tert-butylphenyl)phosphite (AO-168), 3,9-bis(2,4-dicumylphenoxy)-2,4,8,10-tetraoxa-3,9-diphosphaspiro [5.5]undecane, and bis(2,6-di-ter-butyl-4-methylphenyl) pentaerythritoldiphosphite. For example, the phosphonite antioxidants may comprise phosphonite esters. An exemplary compound may be tetrakis(2,4-di-tert-butylphenyl)[1,1'-biphenyl]-4,4'-diylbis(phosphonite) (PEPQ). For example, the benzofuranone antioxidants may comprise 3-arylbenzofuranones. An exemplary compound may be 5,7-di-tert-butyl-3-(3,4-dimethylphenyl)3H-benzofuran-2-one. For example, the thiodipropionate antioxidants may comprise thiodipropionic acid alkyl esters. An exemplary compound may be 3,3'-thiodipropionic acid dioctadecylester. For example, the acryloyl antioxidants may comprise acryloyl modified phenols. An exemplary compound may be 2-(1,1-dimethylethyl)-6-[[3-(1,1-dimethylethyl)-2-hydroxy-5-methylphenylymethyl-4-methylphenyl acrylate.

According to the present invention the acid scavengers may be any suitable acid scavengers known in the art. Acid scavengers are selected from the group consisting of metallic stearates, hydrotalcites, hydrocalumites, metallic oxides, metallic carbonates and combinations thereof. For example, the metallic stearates may comprise calcium stearate and zinc stearate. For example, the hydrotalcites may comprise $Mg_{4.3}Al_2(OH)_{12.6}CO_3 \bullet mH_2O$ (DHT). For example, the hydrocalumites may comprise $[Ca_2Al(OH)_6]OH \bullet mH_2O$, $[Ca_2Al(OH)_6]CO_3 \bullet mH_2O$, $[Ca_2Al(OH)_6]HPO_3 \bullet mH_2O$, $[Ca_2Al(OH)_6]SO_4 \bullet mH_2O$, $[Ca_2Al(OH)_6]Cl \bullet mH_2O$ and combinations thereof. For example, the metallic oxides may comprise zinc oxide, calcium oxide, magnesium oxide and combinations thereof. For example, the metallic carbonates may comprise zinc carbonate, calcium carbonate, magnesium carbonate and combinations thereof.

According to the present invention the nucleating agents or clarifiers may be any suitable nucleating agents or clarifiers known in the art. Furthermore, nucleating agents or clarifiers are preferentially used, which can be selected from the group consisting of talc, metal benzoates, metal sulfates, carboxylic acid salts, phosphate ester salts, sorbitol-based clarifiers, nonitol-based clarifiers and combinations thereof. For example, the metal benzoates may comprise sodium benzoate, lithium benzoate and aluminium hydroxy bis-(4-tert-butyl) benzoate. For example, the metal sulfates may comprise barium sulfate. For example, the carboxylic acid salts may comprise 1,2-cyclohexane dicarboxylic acid metal salts and bicyclo [2.2.1] heptane- 2,3-dicarboxylic acid metal salts. For example, the phosphate ester salts may comprise lithium 2,2'-methylene-bis-(4,6-di-tert-butylphenyl) phosphate, sodium 2,2'-methylene-bis-(4,6-di-tert-butylphenyl) phosphate, aluminium hydroxy 2,2'-methylene-bis-(4,6-di-tert-butylphenyl) phosphate. For example, the sorbitol-based clarifiers may comprise 1,3:2,4-bis(3,4-dimethylbenzylidene)sorbitol (DMDBS), 1,3:2,4-bis(p-methyl-benzylidene) sorbitol (MDBS), 1,3:2,4-dibenzylidene sorbitol (DBS). For example, the nonitol-based clarifiers may comprise 1,2,3-tridesoxy-4,6:5,7-bis-O-[(4-propylphenyl) methylene]nonitol. Commercial examples for nucleating agents and clarifiers include Milliken HPN-600ei, Milliken HPN-68L, Milliken HPN-20E, Milliken HPN-715, Milliken Millad 3988, Milliken Millad NX 8000, Adeka MI.NA.08, Adeka NA-11, Adeka NA-21, Adeka NA-27, Adeka NA-71.

According to the present invention the antistatic agents may be any suitable antistatic agents known in the art. Antistatic agents include glycerol monostearates (GMS-55, GMS-90) or ethoxylated alkyl amines.

According to the present invention the slip agents may be any suitable slip agents known in the art. Slip agent include erucamides and oleamides.

According to the present invention the antiblocking agents may be any suitable antiblocking agents known in the art. Antiblocking agents include silica.

Preferably, the ii) one or more additive(s) are antioxidants, acid scavengers and nucleating agents, more preferably the ii) one or more additive(s) are antioxidants, acid scavengers, antistatic agents and nucleating agents, still more preferably the ii) one or more additive(s) are antioxidants, acid scavengers, antistatic agents, nucleating agents and clarifiers, even more preferably the ii) one or more additive(s) are antioxidants, acid scavengers, antistatic agents, nucleating agents, clarifiers and slip agents, most preferably the ii) one or more additive(s) are antioxidants, acid scavengers, antistatic agents, nucleating agents, clarifiers, slip agents and antiblocking agents.

## The use of the polymer and the article

The present invention relates to the use of the composition according to the present invention in a polymer blend according to the present invention.

Finally, the present invention relates to an article comprising the composition according to the present invention or the polymer blend according to the present invention.

The article may be produced by any suitable method known in the art for forming articles from a polymer composition and/or polymer blend.

**Examples**

**Methods:**

**Compounding Trials:**

Inventive examples IE-1 and IE-2 and comparative examples CE-7 to CE-10 were prepared using a co-rotating twin-screw extruder (screw diameter D: 25.5 mm). The polymer compositions were extruded together with an additive premix for process stabilization. The additive premix contained Irganox 1010 (BASF SE, Germany), Irganox 168 (BASF SE, Germany), calcium stearate (Baerlocher GmbH, Germany), and Systalen C45003 (Systec Plastics GmbH, Germany) in a ratio of 1: 1: 1.8:7.6. The additive premix was dosed such that the final compositions contained additional 450 ppm of Irganox 1010, 450 ppm of Irganox 168, and 800 ppm of calcium stearate. All components were dosed using gravimetric feeders and through the main feeding port of the extruder. The compositions were extruded using a standard screw configuration containing conveying, kneading, transition, and back-mixing elements. The extruder was operated at 350 rpm and with an increasing temperature profile from 140 to 210°C. The produced polymer strands were cooled in a cold water bath and pelletized using a granulator. Between the preparation of different polymer blends, the extruder and feeders were cleaned to prevent cross-contamination.

From the prepared inventive examples IE-1 and IE-2 and comparative examples CE-7 to CE-10, test specimen were prepared according to ISO 19069-2 and ISO 20753. The test specimen were conditioned for 7 days at 23°C and 50% relative humidity prior to testing. Flexural modulus values were determined according to ISO 178. Charpy (notched) impact resistance values at 23°C were determined according to ISO 179-1/1eA on notched test specimen.

$$Stiffness\ Improvement\ [\%] = \left[\frac{Elastic\ Modulus\ of\ the\ Example}{Elastic\ Modulus\ of\ the\ Reference} - 1\right] \times 100\%$$

For calculation of the stiffness improvement, either elastic moduli from flexural testing according to ISO 178 or from tensile testing according to ISO 527-2 were used.

**Injection Molding Trials**:

Inventive examples IE-3 and IE-4 and comparative examples CE-11 and CE-12 were prepared by blending pellets of PCR-1 and P-1, P-3, P-4, or P-5 using a tumble mixer. The blended pellet mixtures were then directly fed into the hopper of an injection molding machine. The temperature profiles for the heating zones of the injection molding machine were as follows: for CE-11: 230°C / 225°C / 220°C / 215°C / 210°C, for CE-12: 200°C / 195°C / 190°C / 185°C / 180°C, for IE-3: 230°C / 225°C / 220°C / 215°C / 210°C, for IE-4: 200°C / 195°C / 190°C / 185°C / 180°C. Test specimen for mechanical testing were prepared according to ISO 19069-2 and ISO 20753. The test specimen were conditioned for 7 days at 23°C and 50% relative humidity prior to testing. Flexural modulus values were determined according to ISO 178. Charpy (notched) impact resistance values at 23°C were determined according to ISO 179-1/1eA on notched test specimen.

**Calculation of Reduction of the Use of Natural Resources and Carbon Footprint**

The reduction of the use of natural resources and carbon footprint was calculated based on the following equations and literature values. For the calculations, the weight fraction of the "virgin polymer composition" comprising polymeric components and additives was taken into account, i.e., the final polymeric material. "Virgin polymer composition" refers to materials which have not yet been converted to articles and have not been used by consumers or industry. Furthermore, the "virgin polymer composition" are characterized by not having been processed at elevated temperatures of $\geq$ 150°C more than one time.

$$Reduction\ of\ the\ Use\ of\ Natural\ Resources\ [\%]$$
$$= (100wt\%$$
$$- Weight\ Fraction\ of\ virgin\ polymer\ composition\ [wt\%]) \times \frac{\%}{wt\%}$$

$$Carbon\ Footprint\ [kg\ CO_2 - eq./kg\ Material]$$
$$= f_{Virgin} \times (Carbon\ Footprint)_{Virgin}$$
$$+ f_{Recycled} \times (Carbon\ Footprint)_{Recycled}$$

with f: weight fraction [wt%]/100wt%

$$Reduction\ of\ Carbon\ Footprint\ [\%]$$
$$= \left[1 - \frac{Carbon\ Footprint\ [kg\ CO2 - eq./kg\ Material]}{(Carbon\ Footprint)_{Virgin}}\right] \times 100\%$$

Values considered for the carbon footprint calculation:

Virgin polymer composition: 1.72 kg $CO_2$-eq./ kg Material. Source: Average of Table 4 of Alsabri et al. Polymers 2021, 13, 3793.;

Recycled polymer composition: 0.8 kg $CO_2$-eq./ kg Material. Source: Systec Plastics GmbH, Germany (supplier of PCR-1 (CE-5) and PCR-2 (CE-6)).

**Synthesis Examples:**

**Reference Example P-1:** Polypropylene polymer composition P-1 was prepared by synthesizing a polypropylene homopolymer in a vertically-stirred gas phase reactor (Novolen type) at 30 bar and 80°C using a stereospecific MgCh-supported granular Ziegler-Natta catalyst containing diisobutyl phthalate (DIBP) as internal donor. External donor (cyclohexylmethyldimethoxysilane) was fed to the reactor to increase isotacticity. Hydrogen was fed to the reactor to control polymer molecular weight, and the feed rate was adjusted to achieve an MFR (230°C, 2.16kg) of about 1 g/10 min. The obtained powder was extruded on a twin-screw extruder with 160 ppm Cyanox 1790 (Solvay S.A., Belgium), 600 ppm ADK STAB PEP-36 (Adeka Corp., Japan), and 600 ppm calcium stearate with respect to the total composition.

**Reference Example P-2:** Polypropylene polymer composition P-2 was prepared by synthesizing a polypropylene homopolymer in a vertically-stirred gas phase reactor (Novolen type) at 30 bar and 80°C using a stereospecific MgCh-supported granular Ziegler-Natta catalyst containing diisobutyl phthalate (DIBP) as internal donor. External donor (cyclohexylmethyldimethoxysilane) was fed to the reactor to increase isotacticity. Hydrogen was fed to the reactor to control polymer molecular weight, and the feed rate was adjusted to achieve an MFR (230°C, 2.16kg) of about 12 g/10 min. The obtained powder was extruded on a twin-screw extruder with 500 ppm Irganox 1010 (BASF SE, Germany), 500 ppm Irganox 168 (BASF SE, Germany), and 800 ppm calcium stearate with respect to the total composition.

**Reference Example P-3:** Polypropylene polymer composition P-3 was prepared by synthesizing a polypropylene homopolymer in a vertically-stirred gas phase reactor (Novolen type) at 30 bar and 75°C using a stereospecific MgCh-xROH-supported Ziegler-Natta catalyst containing a diether-based internal donor. The catalyst was prepared according to US 10,066,034 B2 with 2-isopropyl-2-isopentyl-1,3-dimethoxypropane (I3I5) as internal donor (ID), an ID/Mg ratio of 0.13, with the difference of stationary titanation steps instead of Soxhlet extraction. External donor (isobutyl (isopropyl) dimethoxysilane) was fed to the reactor to increase isotacticity. Hydrogen was fed to the reactor to control polymer molecular weight, and the feed rate was adjusted to achieve an MFR (230°C, 2.16kg) of about 145 g/10 min. The obtained powder was extruded on a twin-screw extruder with 450 ppm Irganox 1010 (BASF SE, Germany), 450 ppm Irganox 168 (BASF SE, Germany), and 800 ppm calcium stearate with respect to the total composition.

**P-4:** Inventive polypropylene polymer composition P-4 was prepared by synthesizing a polypropylene homopolymer in a vertically-stirred gas phase reactor (Novolen type) at 30 bar and 75°C using a stereospecific MgCh-xROH-supported Ziegler-Natta catalyst containing a diether-based internal donor. The catalyst was prepared according to US 10,066,034 B2 with 2-isopropyl-2-isopentyl-1,3-dimethoxypropane (I3I5) as internal donor (ID), an ID/Mg ratio of 0.19, with the difference of stationary titanation steps instead of Soxhlet extraction. External donor (isobutyl(isopropyl) dimethoxysilane) was fed to the reactor to increase isotacticity. Hydrogen was fed to the reactor to control polymer molecular weight, and the feed rate was adjusted to achieve an MFR (230°C, 2.16kg) of about 1 g/10 min. The obtained powder was extruded on a twin-screw extruder with 450 ppm Irganox 1010 (BASF SE, Germany), 900 ppm Irganox 168 (BASF SE, Germany), 300 ppm DHT-4A (Kisuma Chemicals B.V., Netherlands), and 4500 ppm NA-27 (Adeka Corp., Japan) with respect to the total composition.

**P-5:** Inventive polypropylene polymer composition P-5 was prepared by synthesizing a polypropylene homopolymer in a vertically-stirred gas phase reactor (Novolen type) at 30 bar and 75°C using a stereospecific MgCh-xROH-supported Ziegler-Natta catalyst containing a diether-based internal donor. The catalyst was prepared according to US 10,066,034 B2 with 2-isopropyl-2-isopentyl-1,3-dimethoxypropane (I3I5) as internal donor (ID), an ID/Mg ratio of 0.19, with the difference of stationary titanation steps instead of Soxhlet extraction. External donor (isobutyl(isopropyl) dimethoxysilane) was fed to the reactor to increase isotacticity. Hydrogen was fed to the reactor to control polymer molecular weight, and the feed rate was adjusted to achieve an MFR (230°C, 2.16kg) of about 135 g/10 min. The obtained powder was extruded on a twin-screw extruder with 450 ppm Irganox 1010 (BASF SE, Germany), 450 ppm Irganox 168 (BASF SE, Germany), 800 ppm calcium stearate, 600 ppm glycerol mono-stearate (GMS-55), and 500 ppm NA-27 (Adeka Corp., Japan) with respect to the total composition.

**Comparative Examples of virgin and recycled polypropylene compositions:**

CE-1: Comparative Example CE-1 was a virgin polypropylene homopolymer composition that was prepared by synthesizing a polypropylene homopolymer in a vertically-stirred gas phase reactor (Novolen type) using a stereospecific MgCh-xROH-supported Ziegler-Natta catalyst containing a diether-based internal donor. The catalyst was prepared according to US 10,066,034 B2 with 2-isopropyl-2-isopentyl-1,3-dimethoxypropane (I3I5) as internal donor (ID), an ID/Mg ratio of 0.13, with the difference of stationary titanation steps instead of Soxhlet extraction. External donor was fed to the reactor to increase isotacticity. Hydrogen was fed to the reactor to control polymer molecular weight. The obtained powder was extruded on a twin-screw extruder with an additive package comprising antioxidants, acid scavengers, and a nucleating agent.

CE-2: Comparative Example CE-2 was a virgin polypropylene homopolymer composition that was prepared by synthesizing a polypropylene homopolymer in a vertically-stirred gas phase reactor (Novolen type) using a stereospecific MgCh-xROH-supported Ziegler-Natta catalyst containing a diether-based internal donor. The catalyst was prepared according to US 10,066,034 B2 with 2-isopropyl-2-isopentyl-1,3-dimethoxypropane (I3I5) as internal donor (ID), an ID/Mg ratio of 0.13, with the difference of stationary titanation steps instead of Soxhlet extraction. External donor was fed to the reactor to increase isotacticity. Hydrogen was fed to the reactor to control polymer molecular weight. The obtained powder was extruded on a twin-screw extruder with an additive package comprising antioxidants, acid scavengers, but no nucleating agent.

CE-3: Comparative Example CE-3 was a virgin propylene ethylene random copolymer composition that was prepared by synthesizing a propylene ethylene random copolymer in a vertically-stirred gas phase reactor (Novolen type) using a stereospecific MgCh-xROH-supported Ziegler-Natta catalyst containing diisobutyl phthalate (DIBP) as internal donor. External donor was fed to the reactor to increase isotacticity. Hydrogen was fed to the reactor to control polymer molecular weight. The obtained powder was extruded on a twin-screw extruder with an additive package comprising antioxidants, acid scavengers, and a clarifier.

CE-4: Comparative Example CE-4 was a virgin propylene ethylene impact copolymer composition that was prepared by synthesizing a propylene ethylene impact copolymer in a vertically-stirred gas phase two-reactor cascade (Novolen type) using a stereospecific MgCh-xROH-supported Ziegler-Natta catalyst containing diisobutyl phthalate (DIBP) as internal donor. Propylene, hydrogen, and external donor were fed to the first reactor to produce a low molecular weight homopolymer, which was then transferred to the second reactor. In the second reactor, propylene, ethylene, and isopropanol were fed to achieve a propylene ethylene impact copolymer with heterophasic morphology. The obtained powder was extruded on a twin-screw extruder with an additive package comprising antioxidants, acid scavengers, and a nucleating agent.

CE-5: Comparative Example CE-5 was a recycled polymer composition PCR-1 from polypropylene-based input streams, i.e., the commercially available product Systalen C45003 of Systec Plastics GmbH, Germany. The product originated from >99% post-consumer waste.

CE-6: Comparative Example CE-6 was a recycled polymer composition PCR-2 from polypropylene-based input streams, i.e., the commercially available product Systalen C14002 of Systec Plastics GmbH, Germany. The product originated from >99% post-consumer waste.

**Examples from Compounding Trials** (with respect to the components before adding the additive premix for process stabilization):

CE-7: 100% PCR-1
CE-8: Polymer blend: 60% PCR-1 + 40% P-2
CE-9: Polymer blend: 80% PCR-1 + 20% P-1
CE-10: Polymer blend: 60% PCR-1 + 40% P-1
IE-1: Polymer blend: 80% PCR-1 + 20% P-4
IE-2: Polymer blend: 60% PCR-1 + 40% P-4

**Examples from Injection Molding Trials:**

    **CE-11:** Polymer blend: 80% PCR-1 + 20% P-1
    **CE-12:** Polymer blend: 80% PCR-1 + 20% P-3
    **IE-3:** Polymer blend: 80% PCR-1 + 20% P-4
    **IE-4:** Polymer blend: 80% PCR-1 + 20% P-5

**Results:**

The examples P-1 to P-5 were prepared as described above. In table 1 below, the properties of the prepared polypropylene polymer compositions of the reference examples P-1 to P-3 and of the examples according to the present invention P-4 and P-5 are shown. It can be seen that the combination of properties MFR, XS, $T_3$, PI and $T_c$ of the examples of the present invention P-4 and P-5 lead to higher Relation I values of 9.6 and 11.2 compared to the lower Relation I values of the reference examples P-1 to P-4 of 1.1 up to 4.0.

**Table 1: Properties of polymer compositions used for the preparation of inventive and comparative examples.**

| Polymer | P-1 | P-2 | P-3 | **P-4** | **P-5** |
|---|---|---|---|---|---|
| Purpose | for CE | for CE | for CE | **for IE** | **for IE** |
| Internal Donor (ID) | DIBP | DIBP | I3I5 | **1315** | **1315** |
| ID/Mg ratio [-] | N/A | N/A | 0.13 | **0.19** | **0.19** |
| MFR (2.16kg, 230°C) [g/10 min] (ISO 1133) | 1.3 | 12.7 | 144.4 | **0.9** | **134.4** |
| XS [wt%] | 2.7 | 3.8 | 2.3 | **2.2** | **2.4** |
| $T_3$ [°C] | 116.9 | 118.2 | 116.3 | **117.6** | **117.3** |
| PI [-] | 4.7 | 4.1 | 2.2 | **3.9** | **2.4** |
| PI Ratio [-] | 1.23 | 1.30 | 0.90 | **0.99** | **0.98** |
| $T_M$ [°C] (ISO 11357-3) | 162.3 | 163.9 | 160.1 | **165.9** | **164.6** |
| $T_C$ [°C] (ISO 11357-3) | 111.9 | 112.3 | 117.0 | **131.8** | **130.2** |
| Relation I | 1.1 | 1.1 | 4.0 | **11.2** | **9.6** |

Moreover, the comparative examples CE-1 to CE-6 were prepared as described above or were commercially available. In table 2 part 1 and part 2 the properties of the comparative examples CE-1 to CE-6 are shown. Furthermore, the values of the reduction of the use of natural resources, the carbon footprint, and the reduction of carbon footprint are shown.

As can be seen, the fully virgin polymer compositions of CE-1 to CE-4 had a high carbon footprint. The fully recycled polymer compositions of comparative examples CE-5 and CE-6 had a reduced carbon footprint and had used a reduced amount of natural resources, but the flexural modulus values (stiffness) of the fully recycled polymer compositions (1088 to 1164) are lower compared to the flexural modulus values of the fully virgin polymer compositions of CE-1 to CE-4 (1256 to 1500).

**Table 2 part 1: Properties of comparative examples of virgin and recycled polypropylene compositions.**

| Example | CE-1 | CE-2 | CE-3 |
|---|---|---|---|
| Composition | Virgin PP Homo | Virgin PP Homo | Virgin PP Random |
| MFR (2.16kg, 230°C) [g/10 min] (ISO 1133) | 14.0 | 11.1 | 13.2 |
| PI [-] | 3.4 | 2.9 | 2.7 |
| $T_M$ [°C] (ISO 11357-3) | 163.9 | 163.5 | 152.6 |

(continued)

| Example | CE-1 | CE-2 | CE-3 |
|---|---|---|---|
| Composition | Virgin PP Homo | Virgin PP Homo | Virgin PP Random |
| $T_C$ [°C] (ISO 11357-3) | 124.2 | 120.1 | 122.5 |
| Ethylene Content [wt%] | - | - | 2.3 |
| Flexural Modulus [MPa] (ISO 178) | 1500 | 1344 | 1256 |
| Charpy (Notched) 23°C [kJ/m$^2$] (ISO 179-1) | 3.1 | 3.6 | 5.2 |
| Weight Fraction of Virgin Polymer Composition [wt%] | 100 | 100 | 100 |
| Reduction of the Use of Natural Resources [%] | 0 | 0 | 0 |
| Carbon Footprint [kg $CO_2$-eq./ kg Material] | 1.72 | 1.72 | 1.72 |
| Reduction of Carbon Footprint [%] | 0 | 0 | 0 |

**Table 2 part 2: Properties of comparative examples of virgin and recycled polypropylene compositions.**

| Example | CE-4 | CE-5 | CE-6 |
|---|---|---|---|
| Composition | Virgin PP ICP | PCR-1 neat | PCR-2 neat |
| MFR (2.16kg, 230°C) [g/10 min] (ISO 1133) | 21.2 | 21.3 | 15.0 |
| PI [-] | 3.1 | 3.1 | 3.5 |
| $T_M$ [°C] (ISO 11357-3) | 164.0 | 161.7 | 162.0 |
| $T_C$ [°C] (ISO 11357-3) | 132.8 | 124.4 | 124.8 |
| Ethylene Content [wt%] | 4.7 | 13.8 | 8.6 |
| Flexural Modulus [MPa] (ISO 178) | 1444 | 1088 | 1164 |
| Charpy (Notched) 23°C [kJ/m$^2$] (ISO 179-1) | 6.0 | 5.6 | 5.1 |
| Weight Fraction of Virgin Polymer Composition [wt%] | 100 | 0 | 0 |
| Reduction of the Use of Natural Resources [%] | 0 | 100 | 100 |
| Carbon Footprint [kg $CO_2$-eq./ kg Material] | 1.72 | 0.8 | 0.8 |
| Reduction of Carbon Footprint [%] | 0 | 53 | 53 |

Furthermore, the comparative examples CE-7 to CE-10 and the examples IE-1 and IE-2 were prepared according to the method "Compounding Trials" described above. The properties of CE-7 to CE-10, IE-1 and IE-2 are shown in the table 3 part 1 and part 2 below. Furthermore, the respective values stiffness improvement, the reduction of the use of natural resources, the carbon footprint, and the reduction of carbon footprint are shown.

**Table 3 part 1: Properties of comparative examples CE-7 to CE-10 and examples IE-1 and IE-2 from Compounding Trials.**

| Example | CE-7 | CE-8 | CE-9 |
|---|---|---|---|
| Composition* | 100%PCR-1 (extruded) | 60%PCR-1 +40% P-2 | 80%PCR-1 +20% P-1 |
| MFR (2.16kg, 230°C) [g/10 min] (ISO 1133) | 21.0 | 16.8 | 10.1 |

(continued)

| Example | CE-7 | CE-8 | CE-9 |
|---|---|---|---|
| Composition* | 100%PCR-1 (extruded) | 60%PCR-1 +40% P-2 | 80%PCR-1 +20% P-1 |
| PI [-] | 3.1 | 3.5 | 3.6 |
| $T_M$ [°C] (ISO 11357-3) | 161.5 | 163.0 | 162.0 |
| $T_C$ [°C] (ISO 11357-3) | 124.5 | 124.8 | 124.6 |
| Flexural Modulus [MPa] (ISO 178) | 1170 | 1350 | 1250 |
| Stiffness Improvement [%] | 0 (Ref.) | 15 | 7 |
| Charpy (Notched) 23°C [kJ/m$^2$] (ISO 179-1) | 5.7 | 4.8 | 5.9 |
| Weight Fraction of Virgin Polymer Composition [wt%]* | 0 | 40 | 20 |
| Reduction of the Use of Natural Resources [%] | 100 | 60 | 80 |
| Carbon Footprint [kg $CO_2$-eq./ kg Material] | 0.8 | 1.17 | 0.98 |
| Reduction of Carbon Footprint [%] | 53 | 32 | 43 |
| (*): with respect to the components before adding the additive premix for process stabilization. | | | |

**Table 3 part 2: Properties of comparative examples CE-7 to CE-10 and examples IE-1 and IE-2 from Compounding Trials.**

| Example | CE-10 | IE-1 | IE-2 |
|---|---|---|---|
| Composition* | 60%PCR-1 +40%P-1 | **80%PCR-1 +20%P-4** | **60%PCR-1 +40%P-4** |
| MFR (2.16kg, 230°C) [g/10 min] (ISO 1133) | 5.9 | **9.6** | **4.6** |
| PI [-] | 4.2 | **3.9** | **4.3** |
| $T_M$ [°C] (ISO 11357-3) | 162.1 | **163.6** | **164.5** |
| $T_C$ [°C] (ISO 11357-3) | 124.5 | **129.4** | **131.3** |
| Flexural Modulus [MPa] (ISO 178) | 1340 | **1410** | **1590** |
| Stiffness Improvement [%] | 15 | **21** | **36** |
| Charpy (Notched) 23°C [kJ/m$^2$] (ISO 179-1) | 6.0 | **5.4** | **5.5** |
| Weight Fraction of Virgin Polymer Composition [wt%]* | 40 | **20** | **40** |
| Reduction of the Use of Natural Resources [%] | 60 | **80** | **60** |
| Carbon Footprint [kg $CO_2$-eq./ kg Material] | 1.17 | **0.98** | **1.17** |
| Reduction of Carbon Footprint [%] | 32 | **43** | **32** |
| (*): with respect to the components before adding the additive premix for process stabilization. | | | |

As can be seen from table 3 part 1 and part 2, the polymer blends of examples IE-1 and IE-2 had a reduction of carbon footprint of 43% and 32% compared to the virgin polymer compositions of CE-1 to CE-4. The comparative examples CE-7 to CE-10 had a reduction of carbon footprint of 32% up to 53% compared to the virgin polymer compositions of CE-1 to CE-4. However, the flexural modulus values (stiffness) of the comparative example CE-7, containing 100% of recycled polymer composition PCR-1, was lower compared to the flexural modulus values of the fully virgin polymer compositions of comparative examples CE-1 to CE-4. In addition, it can be seen that the polymer blends of comparative examples CE-8 to CE-10, comprising virgin polymer compositions according to reference examples P-1 and P-2, had only a low improvement of stiffness of 7% to 15%.

The polymer blends of examples IE-1 and IE-2, comprising the virgin polymer composition of example P-4 having the specific combination of properties resulting in a Relation I value of >4.0, had a high reduction of carbon footprint and a high reduction of use of natural resources in combination with a high improvement of stiffness of 21% to 36%. The stiffness improvement of IE-1 and IE-2 was higher compared to the stiffness improvement of comparative examples CE-8 to CE-10.

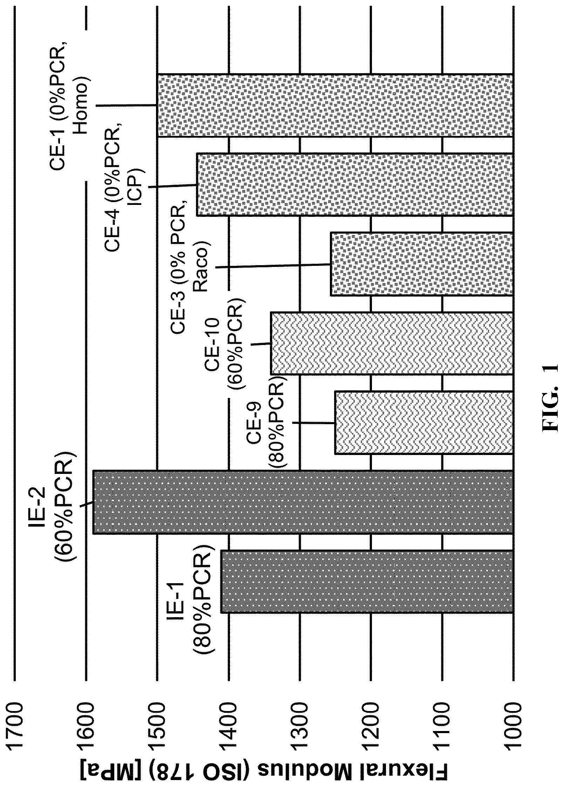

Moreover, as can be seen from figure 1, the polymer blends of examples IE-1 and IE-2 had flexural modulus values, which were higher compared to comparative examples CE-9 and CE-10 containing the polymer composition of reference example P-1. Additionally, the flexural modulus values of the polymer blends of examples IE-1 and IE-2 were comparable or even higher with respect to the flexural modulus values of the fully virgin polymer compositions of CE-1 to CE-4. Therefore, the polymer blends of examples IE-1 and IE-2, comprising the polypropylene polymer composition according to the present invention (according to example P-4), had a low carbon footprint and excellent stiffness values, which were comparable or even improved compared to fully virgin polymer compositions.

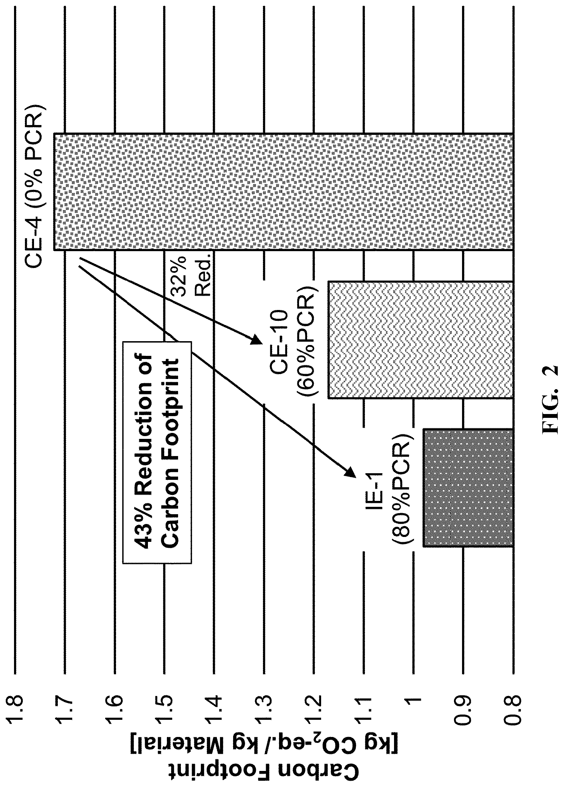

As shown in figure 2, the polymer blends of example IE-1, which had an excellent stiffness improvement of 21% (c.f. table 3 part 2), had a reduction of carbon footprint of 43%. Whereas the polymer blend of CE-10 only had a reduction of carbon footprint of 32% with a low stiffness improvement of 15% (c.f. table 3 part 2). All examples and comparative examples of figure 2 had approximately the same flexural modulus (stiffness) of 1400 MPa ($\pm$5%). Thus, example IE-1 provided the highest reduction of carbon footprint while achieving identical material properties.

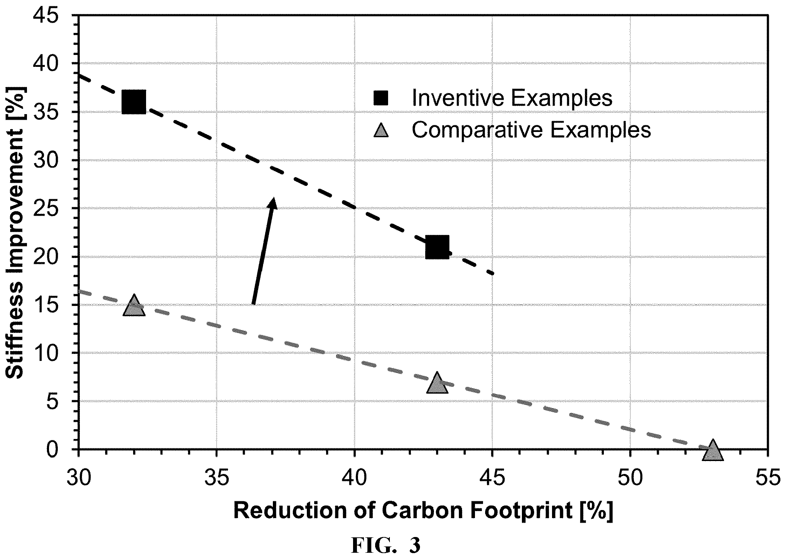

Figure 3 is a diagram showing the values for the reduction of carbon footprint in relation to the values for the stiffness improvement for the comparative examples CE-7 to CE-10 and of the examples IE-1 and IE-2. From this diagram, it can be determined that by using the polypropylene polymer composition of the present invention P-4 in polymer blends according to the present invention improved stiffness values were achieved compared to polymer blends comprising the same amount of recycled polymer compositions, but which comprised a polypropylene polymer composition which was not according to the present invention P-1 or P-2. The inventive examples IE-1 and IE-2 achieved improved stiffness values at comparable values for carbon footprint reduction. Therefore, the polymer blends of the present invention were highly sustainable and offered an improved stiffness compared to other polymer blends comprising recycled polymer compositions.

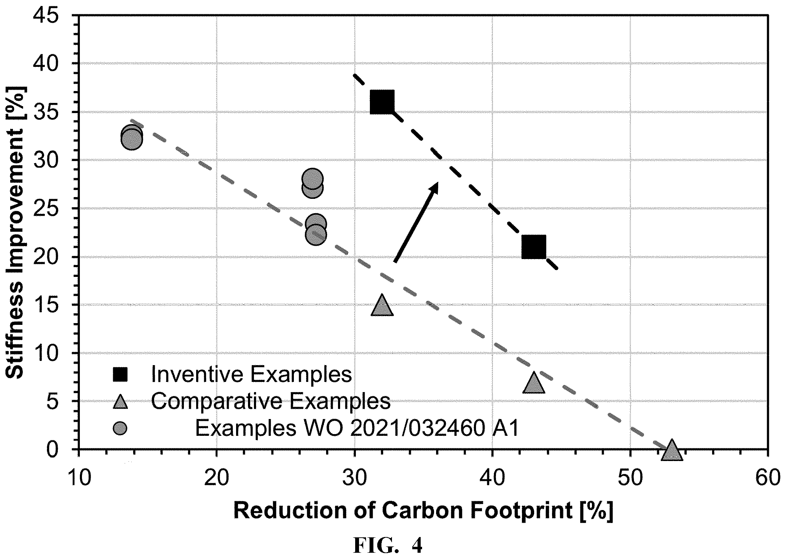

This can additionally be derived from the data of figure 4, which is identical to figure 3, but additionally the values for the examples according to the invention disclosed in WO 2021/032460 A1 were added to the diagram (stiffness improvement (tensile modulus) relative to CE2 of WO 2021/032460 A1; calculation of the reduction of carbon footprint as described herein). The examples of WO 2021/032460 A1 represent state of the art polymer blends based on recycled polymer compositions. As can be seen from the plotted extrapolation lines in the diagram of figure 4, the examples of the present invention offered improved stiffness values at a comparable reduction of carbon footprint value. Therefore, the examples of the present invention were an improvement over the prior art WO 2021/032460 A1.

Finally, the comparative examples CE-11 and CE-12 and the examples IE-3 and IE-4 were prepared according to the method "Injection Molding Trials" described above. The properties of CE-5, CE-11, CE-12, IE-3 and IE-4 are shown in table 4 below.

**Table 4. Comparative examples and examples from Injection Molding Trials.**

| Example | CE-5 | CE-11 | CE-12 | IE-3 | IE-4 |
|---|---|---|---|---|---|
| Composition | 100% PCR-1 | 80% PCR-1 +20%P-1 | 80% PCR-1 +20%P-3 | **80% PCR-1 +20%P-4** | **80% PCR-1 +20% P-5** |
| MFR (2.16kg, 230°C) [g/10 min] (ISO 1133) | 21.3 | 12.4 | 37.7 | **9.2** | **36.3** |
| PI [-] | 3.1 | 3.6 | 2.9 | **3.9** | **2.9** |
| $T_M$ [°C] (ISO 11357-3) | 161.7 | 162.6 | 162.1 | **163.8** | **162.2** |

(continued)

| Example | CE-5 | CE-11 | CE-12 | IE-3 | IE-4 |
|---|---|---|---|---|---|
| Composition | 100% PCR-1 | 80% PCR-1 +20%P-1 | 80% PCR-1 +20%P-3 | **80% PCR-1 +20%P-4** | **80% PCR-1 +20% P-5** |
| $T_C$ [°C] (ISO 11357-3) | 124.4 | 124.0 | 124.4 | **128.8** | **124.6** |
| Flexural Modulus [MPa] (ISO 178) | 1088 | 1123 | 1093 | **1250** | **1167** |
| Stiffness Improvement [%] | 0 (Ref.) | 3 | 0 | **15** | **7** |
| Charpy (Notched) 23°C [kJ/m$^2$] (ISO 179-1) | 5.6 | 5.7 | 5.1 | **5.7** | **4.9** |
| Weight Fraction of Virgin Polymer Composition [wt%] | 0 | 20 | 20 | **20** | **20** |
| Reduction of the Use of Natural Resources [%] | 100 | 80 | 80 | **80** | **80** |
| Carbon Footprint [kg $CO_2$-eq./ kg Material] | 0.8 | 0.98 | 0.98 | **0.98** | **0.98** |
| Reduction of Carbon Footprint [%] | 53 | 43 | 43 | **43** | **43** |

As can be seen from table 4, the polymer blends of the present invention comprising a polypropylene polymer composition according to the present invention (P-4 or P-5) in addition to the recycled polymer composition (PCR-1) offered improved stiffness over the comparative examples CE-5, CE-11 and CE-12. Consequently, it was demonstrated that the compositions according to the present invention can be used to provide improved polymer blends according to the present invention having excellent material properties, a low manufacturing complexity and a reduced carbon footprint.

**Claims**

1. A polymer blend comprising at least the following components:

   a) a composition comprising:

      i) one or more polypropylene polymer(s),
      ii) one or more additive(s) selected from the group consisting of antioxidants, acid scavengers, antistatic agents, nucleating agents, clarifiers, slip agents, and antiblocking agents;

   whereby the composition according to a) is **characterized by** the following equation (1):

$$Relation\ I = \frac{T_3 + T_c - 225°C}{PI\ ratio \times \frac{XS}{wt\%} \times °C} \qquad (1)$$

   wherein
   Relation I is a value of >4.0;
   $T_3$ is the peak maximum temperature in °C determined by analytical temperature rising elution fractionation method;
   $T_c$ is the peak crystallization temperature in °C;
   XS represents the xylene cold soluble content of the composition in wt%; and the PI ratio is defined according to the following equation (2):

$$PI\ ratio = \frac{PI}{-0.679 \times \log\left(\frac{MFR}{g/10min}\right) + 3.9} \qquad (2)$$

wherein
PI represents the rheological polydispersity index; and
MFR represents the melt mass-flow rate in g/10min;

b) one or more recycled polymer composition(s).

2. The polymer blend according to claim 1, wherein in equation (1) $T_3$ is of from 115.5°C to 140.0°C.

3. The polymer blend according to claim 1 or 2, wherein in equation (1) $T_c$ is of from 115.0°C to 145.0°C.

4. The polymer blend according to any one of claims 1 to 3, wherein in equation (1) XS is ≤5.5wt%.

5. The polymer blend according to any one of claims 1 to 4, wherein in equation (1) and (2) the PI ratio is of from 0.90 to 1.23.

6. The polymer blend according to any one of claims 1 to 5, wherein in equation (2) the MFR is of from 0.1 to 200g/10min.

7. The polymer blend according to any one of claims 1 to 6, wherein in equation (1) Relation I is a value of >9.0.

8. The polymer blend according to any one of claims 1 to 7, wherein in equation (1) $T_3$ is of from 117.3°C to 120.0°C, $T_c$ is of from 129.0°C to 135.0°C, XS is ≤2.4wt%, PI ratio is of from 0.95 to 1.13, in equation (2) MFR is of from 0.8 to 140g/10min, and in equation (1) Relation I is a value of ≥9.6.

9. The polymer blend according to any one of claims 1 to 8, wherein the component a) is present in an amount of from 5wt% to 50wt% of the total weight of the polymer blend.

10. The polymer blend according to any one of claims 1 to 9, wherein the component b) is present in an amount of from 50wt% to 95wt% of the total weight of the polymer blend.

11. The polymer blend according to any one of claims 1 to 10, wherein the component b) is **characterized by** a polypropylene homopolymer and/or copolymer content of >50wt%.

12. A method of preparing the polymer blend according to claims 1 to 11 comprising the step:

I) Mixing the components a) and b).

13. A composition comprising:

i) one or more polypropylene polymer(s),
ii) one or more additive(s) selected from the group consisting of antioxidants, acid scavengers, antistatic agents, nucleating agents, clarifiers, slip agents, and antiblocking agents;

whereby the composition according to a) is **characterized by** the following equation (1):

$$Relation\ I = \frac{T_3 + T_C - 225°C}{PI\ ratio \times \frac{XS}{wt\%} \times °C} \qquad (1)$$

wherein
Relation I is a value of >4.0;
$T_3$ is the peak maximum temperature in °C determined by analytical temperature rising elution fractionation method;

$T_c$ is the peak crystallization temperature in °C;
XS represents the xylene cold soluble content of the composition in wt%; and the PI ratio is defined according to the following equation (2):

$$PI\ ratio = \frac{PI}{-0.679 \times \log\left(\frac{MFR}{g/10min}\right) + 3.9} \qquad (2)$$

wherein
PI represents the rheological polydispersity index; and
MFR represents the melt mass-flow rate in g/10min.

**14.** Use of a composition according to claim 13 in a polymer blend according to anyone of claims 1 to 11.

**15.** An article comprising the composition according to claim 13 or the polymer blend according to claims 1 to 11.

FIG. 1

EP 4 389 784 A1

**FIG. 2**

EP 4 389 784 A1

FIG. 3

**FIG. 4**

Europäisches
Patentamt

European
Patent Office

Office européen
des brevets

# EUROPEAN SEARCH REPORT

Application Number

EP 22 21 6571

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 726 603 A1 (BOREALIS TECH OY [FI]) 29 November 2006 (2006-11-29) | 13-15 | INV. C08F110/06 C08K5/00 C08L23/12 |
| Y | * page 10 - page 12; example 1; tables 1-3 * * paragraphs [0028], [0051], [0055] * | 1-15 | |
| X,D | US 10 066 034 B2 (LUMMUS NOVOLEN TECHNOLOGY GMBH [DE]) 4 September 2018 (2018-09-04) | 13 | |
| Y | * example 1 * * examples * * column 15, line 49 - line 51 * | 1-15 | |
| Y,D | WO 2022/084236 A1 (BOREALIS AG [AT]) 28 April 2022 (2022-04-28) * page 1, line 1 - line 32; claims 1,2,15 * * page 3, line 4 - line 6 * | 1-15 | |

TECHNICAL FIELDS
SEARCHED     (IPC)

C08F
C08K
C08L

The present search report has been drawn up for all claims

| Place of search | Date of completion of the search | Examiner |
|---|---|---|
| Munich | 12 May 2023 | Lippert, Sigrid |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

    ...............................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 21 6571

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2023

| Patent document cited in search report | | Publication date | Patent family member(s) | | Publication date |
|---|---|---|---|---|---|
| EP 1726603 | A1 | 29-11-2006 | CN | 101180326 A | 14-05-2008 |
| | | | EA | 200702342 A1 | 30-06-2008 |
| | | | EP | 1726603 A1 | 29-11-2006 |
| | | | EP | 1883660 A1 | 06-02-2008 |
| | | | WO | 2006125673 A1 | 30-11-2006 |
| US 10066034 | B2 | 04-09-2018 | BR | 112015012078 A2 | 11-07-2017 |
| | | | CN | 104981486 A | 14-10-2015 |
| | | | EP | 2935350 A1 | 28-10-2015 |
| | | | EP | 3904399 A1 | 03-11-2021 |
| | | | JP | 6127149 B2 | 10-05-2017 |
| | | | JP | 2015535540 A | 14-12-2015 |
| | | | KR | 20150091326 A | 10-08-2015 |
| | | | MX | 363582 B | 27-03-2019 |
| | | | SG | 10201704438X A | 29-06-2017 |
| | | | SG | 11201504141V A | 30-07-2015 |
| | | | TW | 201420621 A | 01-06-2014 |
| | | | US | 2014148566 A1 | 29-05-2014 |
| | | | US | 2017022304 A1 | 26-01-2017 |
| | | | WO | 2014079969 A1 | 30-05-2014 |
| | | | ZA | 201503545 B | 26-10-2016 |
| WO 2022084236 | A1 | 28-04-2022 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2022084236 A1
- WO 2014167493 A1
- EP 3715410 A1
- WO 2022104275 A1
- EP 3916047 A1
- WO 2021032460 A1
- WO 2021165751 A1
- US 20220145057 A1
- WO 2022123000 A1
- WO 2022123002 A1
- EP 3802689 B1
- US 10066034 B2

### Non-patent literature cited in the description

- **PASQUINI, N.** Polypropylene Handbook. 2005
- **PAULIK et al.** *Macromol. Chem. Phys.,* 2021, vol. 222, 2100302
- **ALSABRI et al.** *Polymers,* 2021, vol. 13, 3793
- *CHEMICAL ABSTRACTS,* 111439-76-0
- *CHEMICAL ABSTRACTS,* 129228-11-1
- **HAALAND et al.** *Anal. Chem.,* 1988, vol. 60, 1193-1202